Europäisches Patentamt

European Patent Office

Office européen des brevets

(19)

(11) **EP 1 316 065 B1**

(12) **FASCICULE DE BREVET EUROPEEN**

(45) Date de publication et mention
de la délivrance du brevet:
**06.07.2005 Bulletin 2005/27**

(21) Numéro de dépôt: **01967439.9**

(22) Date de dépôt: **06.09.2001**

(51) Int Cl.⁷: **G06T 5/00**

(86) Numéro de dépôt international:
**PCT/FR2001/002771**

(87) Numéro de publication internationale:
**WO 2002/021444 (14.03.2002 Gazette 2002/11)**

(54) **PROCEDE DE SEGMENTATION D'UNE IMAGE VIDEO PAR OBJETS ELEMENTAIRES**

VIDEOBILDSEGMENTIERUNGSVERFAHREN UNTER VERWENDUNG VON ELEMENTÄREN OBJEKTEN

METHOD FOR SEGMENTING A VIDEO IMAGE INTO ELEMENTARY OBJECTS

(84) Etats contractants désignés:
**AT BE CH CY DE DK ES FI FR GB GR IE IT LI LU MC NL PT SE TR**

(30) Priorité: **07.09.2000 FR 0011404**

(43) Date de publication de la demande:
**04.06.2003 Bulletin 2003/23**

(73) Titulaire: **FRANCE TELECOM exploitant public 75015 Paris (FR)**

(72) Inventeurs:
• **MAZIERE, Magali**
**F- 35510 Cesson-Sevigne (FR)**
• **CHASSAING, Françoise**
**F- 35000 Rennes (FR)**
• **SANSON, Henri**
**F-35690 Acigné (FR)**

(74) Mandataire: **Loisel, Bertrand**
**Cabinet Plasseraud**
**65/67 rue de la Victoire**
**75440 Paris Cedex 09 (FR)**

(56) Documents cités:
**EP-A- 1 014 303          US-A- 6 031 935**

**Description**

L'invention concerne procédé de segmentation d'une image vidéo par objets élémentaires.

A l'heure actuelle, les méthodes de segmentation d'images vidéo par objets élémentaires issues des processus de vision par ordinateur ne permettent aucunement de reproduire le fonctionnement du système visuel et cognitif humain. En effet, l'image résultante obtenue grâce à la mise en oeuvre des processus précités est sous-segmentée ou sur-segmentée. Dans les deux cas, ces méthodes ne permettent pas de reproduire de façon automatique la segmentation idéale réalisée par un opérateur humain.

Pourtant, de nombreuses applications ont recours à la segmentation, laquelle, pour apparaître idéale, devrait être robuste, rapide, discriminante et non spécifique à un domaine d'application particulier. Plus particulièrement, le suivi ou le calcul automatique, en vue de l'acquisition et de la poursuite, de la trace d'un objet au cours du temps dans une succession d'images vidéo reste un problème totalement ouvert, ce d'autant plus que l'objet est susceptible de se déformer via des transformations complexes au cours du temps, transformations naturelles ou artificielles telles que le "*morphing*" en langage anglosaxon.

Parmi les méthodes de segmentation d'images proposées jusqu'à ce jour, on distingue habituellement plusieurs familles.

Une première famille correspond aux méthodes de segmentation classiques par filtrage, morphologie mathématique, croissance de région, partition d'histogrammes de couleur, méthodes markoviennes. Ces méthodes automatiques sont appliquées sur une image mais les résultats obtenus dépendent fortement du contenu particulier de l'image et sont sensibles à la texture de l'image. Ils ne permettent pas une segmentation de l'image par objets élémentaires dans la mesure où il est difficile de retrouver les contours d'un objet d'intérêt. Les images sont sur-segmentées et les contours détectés ne forment pas tous une liste fermée, garantissant sensiblement l'intégrité du contour de l'objet d'intérêt et la segmentation de ce dernier. La dispersion sur les résultats est grande entre les différentes méthodes et les résultats sont peu robustes, deux images très ressemblantes pouvant aboutir à une segmentation très différente et réciproquement une même image pouvant aboutir à une segmentation très différente avec deux méthodes.

Une deuxième famille regroupe des méthodes basées sur la morphologie mathématique, lesquelles essaient de remédier aux problèmes et aux inconvénients des méthodes de la première famille à partir de processus basés sur une structure d'arbre, arbre binaire de partition permettant de caractériser le contenu des images. Une telle structure d'arbre décrivant l'organisation spatiale de l'image est obtenue en fusionnant itérativement des régions voisines suivant un critère d'homogénéité jusqu'à l'obtention d'une seule région. L'arbre est construit en conservant la trace de régions fusionnées à chaque itération du processus. Cette méthode offre la possibilité de marquer manuellement des régions d'intérêt sur l'image originale et de retrouver dans l'arbre de partition des noeuds correspondant à ce marquage. Les inconvénients des méthodes de cette famille résident dans le fait que l'image entière est segmentée, qu'il est nécessaire d'avoir une connaissance au préalable du nombre de régions constituant l'objet, et que les contours de l'objet obtenus ne sont pas assez précis ou ne sont pas les bons. En effet, il arrive souvent que l'objet d'intérêt soit à cheval sur plusieurs régions, les contours de l'objet, dans un tel cas, ne correspondant donc pas aux contours de ces régions.

Une troisième famille regroupe des méthodes statistiques par champs de Markov. Ces méthodes procèdent à un étiquetage des régions de l'image suivant un critère à maximiser. Elles peuvent prendre en compte un large ensemble d'informations a priori sur l'image et sont particulièrement adaptées aux images satellitaires composées de zones texturées et juxtaposées.

Une quatrième famille concerne les méthodes de contours actifs encore désignés par snake en langage anglosaxon (voir par exemple EP-A-1 014 303). Dans ce type de méthode, décrit dans l'article intitulé "*Snake : Active Contour Models*", publié par M KASS, A. WITKIN et D. TERZOPOULOS à l'International Journal of Computer Vision, vol.1, pp.321-332, 1988, le principe consiste à déformer itérativement une courbe initiale jusqu'à épouser le contenu de l'objet, par minimisation d'une fonctionnelle d'énergie.
Cette énergie est composée de deux termes :

- l'énergie interne du contour, laquelle dépend des propriétés intrinsèques ou géométriques du contour actif telles que la longueur, la courbure, etc. Ce terme d'énergie interne permet une contraction du contour actif autour de l'objet et provoque un déplacement des noeuds de ce dernier dans une direction qui minimise localement l'énergie ;
- l'énergie externe au contour, laquelle correspond à un terme d'attache aux données. Ce terme d'énergie externe est généralement lié aux contours présents dans une image et freine la contraction du contour actif autour de ces contours présents.

On note en particulier que cette famille de méthodes implique une connaissance a priori des contours présents dans l'image, ce qui, en soi, ne peut être réalisé que grâce à une analyse a priori de l'image.

Une cinquième famille de méthodes correspond à un développement de la méthode de la famille précédente, dans lequel, pour ce qui concerne les forces externes appliquées au contour actif, le modèle se comporte comme un ballon se gonflant sous l'effet des forces précitées et s'arrête lorsqu'il rencontre des contours marqués ou prédéfinis. Ainsi, le contour actif peut franchir des contours peu marqués. D'autres développements ont proposé d'utiliser des contours actifs géométriques déformables. Ces développements utilisent des ensembles de niveaux permettant la gestion automatique des changements de topologie du contour actif. Les méthodes de la famille précitée nécessitent toutefois de disposer d'une initialisation proche de la solution finale, c'est-à-dire du contour naturel de l'objet, afin d'obtenir une bonne convergence de l'algorithme.

Une sixième famille de méthodes est basée sur la définition de régions de l'image, par estimation au préalable de ces régions et du fond de l'image. La courbe d'évolution du contour actif est définie en général par dérivation d'un critère au sens des distributions. Ce critère dépend de contraintes relatives à deux ensembles :

le fond de l'image et les objets en mouvement. La courbe d'évolution peut comporter les trois termes suivants :

- un terme d'attache aux données ;
- un terme hyperbolique, permettant une adaptation à la forme des objets, et
- un terme parabolique stabilisant la solution par lissage des contours.

Le sens du mouvement du contour actif varie au cours du temps, permettant au contour actif de se dilater ou, au contraire, de se contracter en certains noeuds. Ces méthodes nécessitent toutefois une labellisation du fond de l'image et le temps d'exécution reste trop important, de l'ordre de plusieurs minutes, pour des applications dynamiques à des objets mobiles d'images vidéo.

En ce qui concerne les méthodes de suivi d'objets dans l'image, encore appelées méthodes de poursuite, différentes familles de méthodes sont actuellement proposées.

Une première famille fait appel à une technique de maillage. Selon une première méthode de cette famille, une structure de maillage hiérarchique estime successivement le mouvement dominant de l'objet, puis les mouvements internes de ce dernier. Une hiérarchie de maillages est engendrée à partir du masque de l'objet définissant une enveloppe polygonale de cet objet. Avant de lancer le cycle hiérarchique d'estimation de mouvement, un modèle global affine initialisant le maillage grossier de la hiérarchie est estimé. Cette estimation est ensuite propagée vers les niveaux les plus fins où une estimation globale est réalisée. Il arrive parfois qu'un noeud s'écarte du contour naturel de l'objet et s'accroche à l'arrière-plan de la scène en entraînant avec lui ses noeuds voisins. Ce processus d'entraînement est lié à une accumulation temporelle des erreurs de positionnement des noeuds, puisque l'on dispose seulement de la segmentation initiale au cours de l'optimisation.

Pour remédier au processus d'entraînement précité, on a proposé une solution consistant à injecter en outre une méthode voisine de celle des contours actifs. Des contours actifs sont engendrés à partir du maillage le plus fin du cycle de hiérarchisation et ils évoluent sur les contours issus de l'image courante segmentée. Ces contours actifs sont injectés après la première estimation du mouvement pour contraindre les sommets du bords du maillage à se repositionner sur les contours extérieurs de l'objet. Cette solution n'a toutefois pas été retenue, car la structure de maillage est alors très complexe à utiliser.

Une deuxième famille fait appel à la mise en oeuvre de contours actifs, selon les méthodes décrites précédemment. Le contour actif obtenu sur l'image courante est propagé d'une image à l'autre et se déforme pour épouser les contours de l'objet d'intérêt sur les images successives. Des contraintes de mouvement peuvent être rajoutées lors de la minimisation de la fonctionnelle d'énergie.

Ces méthodes peuvent en outre combiner des méthodes d'estimation de paramètres par flot optique ou par un modèle de mouvement, tel que translation, transformation affine, perspective, déformation bilinéaire ou autre, et des méthodes de contours actifs, dans le but de rendre plus robuste le suivi ou poursuite d'objet. Dans un exemple spécifique, la méthode de suivi d'objet combine une méthode de contour actif et une analyse du mouvement par régions de l'image. Le mouvement de l'objet est détecté par un algorithme de segmentation basé sur le mouvement. Un modèle de contour actif est alors utilisé dans le but de suivre et de segmenter l'objet. Ensuite, le mouvement de la région définie à l'intérieur du contour actif est alors estimé par une approche multi-résolution par un modèle affine. Un filtre de Kalman est utilisé pour prédire la position de la région précitée et donc initialiser le contour actif dans l'image suivante.

Une troisième famille de méthodes fait appel à des techniques basées sur des cartes d'étiquettes, lesquelles exploitent les processus de partitionnement des images, ou cartes d'étiquettes sur les pixels d'une image. Dans une première méthode, une technique combinant des informations de mouvement et d'organisation spatiale sur les images a été proposée dans le but de suivre un objet. L'image courante est partitionnée par une méthode de morphologie mathématique et l'image résultante est compensée par les vecteurs mouvement estimés grossièrement par un algorithme de mise en correspondance de blocs ou *block-matching* en langage anglo-saxon. L'homogénéité spatiale des régions ou marqueurs est ensuite vérifiée. Ces méthodes présentent les limitations des méthodes de contours actifs classiques, notamment la lenteur de convergence.

Une deuxième méthode est basée sur la technique des champs de Markov. Cette méthode comprend une méthode de segmentation d'image en régions homogènes au sens du mouvement par étiquetage statistique. La partition est obtenue suivant un critère d'intensité, de couleur et de texture.

Une troisième méthode réalise une segmentation spatiale de l'image en régions homogènes et un suivi est réalisé par une méthode de rétro-projection. Il s'agit de déterminer le masque de l'objet d'intérêt sur l'image courante. Chaque région de l'image courante segmentée est alors rétro-projetée suivant le mouvement sur l'image segmentée précédente. Les régions rétro-projetées appartenant au masque de l'objet forment alors le nouveau masque de l'objet sur l'image courante. Ces méthodes présentent l'inconvénient de fournir des contours de l'objet peu précis. En effet, des trous ou artefacts apparaissent, ceci en raison de l'utilisation d'une segmentation initiale de l'image.

Dans le logiciel commercialisé sans la marque "Corel Photo Paint 6", une fonction "lasso" permet de tracer rapidement un contour de façon imprécise avec une souris autour d'un objet. En appuyant ensuite sur un bouton, l'utilisateur obtient une réduction de ce contour pour qu'il enveloppe exactement cet objet. L'utilisateur n'a pas accès aux sources du programme pour savoir comment la fonction est mise en oeuvre.

La présente invention a pour objet de remédier aux inconvénients des techniques de l'art antérieur précitées, tant en ce qui concerne le processus de segmentation d'image que le suivi ou la poursuite d'un objet en mouvement sur des images successives.

En particulier, un objet de la présente invention est la mise en oeuvre d'un procédé de segmentation d'une image vidéo par objets élémentaires dans lequel aucune connaissance a priori sur l'image n'est requise.

Un autre objet de la présente invention est, en raison de l'absence de connaissance a priori sur l'image, la mise en oeuvre d'un procédé de segmentation par contours actifs d'une image vidéo par objets élémentaires dans lequel le contour actif de départ, encore désigné contour de départ, est quelconque vis-à-vis d'un objet élémentaire d'intérêt appartenant à l'image.

Un autre objet de la présente invention est également, compte tenu de l'initialisation du procédé objet de la présente invention à partir d'un contour actif de départ quelconque, la mise en oeuvre d'un procédé de segmentation d'une image vidéo d'une très grande souplesse d'utilisation et d'une très grande tolérance à la sélection d'un utilisateur peu averti, le contour de départ pouvant contenir plusieurs boucles, en l'absence d'une orientation quelconque nécessaire.

Un autre objet de la présente invention est également la mise en oeuvre d'un procédé de segmentation d'image par contours actifs, dans lequel, toute connaissance a priori sur l'image étant supprimée, le terme d'énergie externe est en conséquence supprimé, ce qui permet d'obtenir une grande rapidité de convergence du contour actif courant vers le contour naturel de l'objet élémentaire d'intérêt.

Un autre objet de la présente invention est également la mise en oeuvre d'un procédé de segmentation d'image par contours actifs, dans lequel, en raison de l'absence de connaissance a priori sur l'image, une meilleure tolérance aux bruits et aux contours de l'image mal définis est obtenue.

Un autre objet de la présente invention est également la mise en oeuvre d'un procédé de segmentation d'image par contours actifs, dans lequel, en raison de la tolérance d'un contour de départ à plusieurs boucles, la segmentation de l'image vis-à-vis d'au moins un objet élémentaire à plusieurs composantes peut être mise en oeuvre, ce qui confère un grande degré de flexibilité d'utilisation au procédé objet de la présente invention.

Un autre objet de la présente invention est la mise en oeuvre d'un procédé de segmentation d'une image vidéo par objets élémentaires dans lequel la rapidité de convergence du contour de départ vers le contour naturel de l'objet élémentaire d'intérêt dans l'image autorise une grande stabilité du processus de segmentation dans chaque image, et, en conséquence, un suivi ou une poursuite stable d'objets mobiles sur des images successives, ce qui permet d'obtenir une grande robustesse de poursuite d'un objet d'intérêt mobile sur un grande nombre d'images successives.

En particulier, un autre objet de la présente invention est également la mise en oeuvre d'un procédé de segmentation d'une image vidéo par objets élémentaires dans lequel, en raison de la rapidité de convergence des contours actifs, de la robustesse dans le suivi des objets mobiles et de la subdivision tolérée d'un contour actif en plusieurs contours actifs, chaque contour actif résultant d'une telle subdivision évolue indépendamment car lié à la seule subdivision de l'objet élémentaire d'intérêt.

Un autre objet de la présente invention est enfin la mise en oeuvre d'un procédé de segmentation d'une image vidéo par objets élémentaires dans lequel, grâce à un processus de suivi de mouvement simplifié, la convergence du contour actif courant vers le mouvement de l'objet élémentaire d'intérêt mobile est accélérée.

Le procédé de segmentation d'une image vidéo par objets élémentaires, objet de la présente invention, est remarquable en ce qu'il consiste, vis-à-vis d'au moins un objet élémentaire délimité par un contour naturel de cette image vidéo :

- à définir autour de cet objet élémentaire un contour de départ entourant totalement cet objet élémentaire ;

- à définir, à partir de ce contour de départ, un contour actif d'origine, formé par un ensemble de noeuds distribués sur ce contour de départ, chaque noeud étant formé par un point appartenant à ce contour de départ et par une fonction d'énergie élastique représentative de la distance séparant ce noeud d'un noeud voisin,
- à soumettre, vis-à-vis d'un ensemble de valeurs de référence représentatives du contour naturel de cet objet élémentaire, le contour actif d'origine à une déformation convergente sous une condition de blocage qui détermine si le contour est atteint, par déplacement vers le contour naturel de l'objet élémentaire d'au moins un des noeuds du contour actif d'origine, pour engendrer un contour actif courant, ce contour actif courant étant soumis itérativement à cette déformation convergente pour engendrer des contours actifs courants successifs distincts tant que ce déplacement satisfait à la condition de non blocage et à stopper tout déplacement de noeud de ce contour actif sinon. Ceci permet d'engendrer un contour actif courant final reproduisant sensiblement le contour naturel de l'objet élémentaire.

Le procédé objet de l'invention peut de manière particulièrement avantageuse être mis en oeuvre à partir de modules de programme et trouve application à tous les traitements d'images vidéo impliquant la segmentation par objets et pour lesquels une présélection grossière mais fiable de l'objet à segmenter est réalisable.

Parmi les applications envisageables, on peut citer, de manière non limitative, les applications liées :

■ aux nouveaux services multimédia distribués sur les réseaux distants, tels que le *World Wide Web,* ou les réseaux locaux, encore appelés réseaux d'entreprises, services tels que recherche d'images ou de vidéos, dans le cas de l'archivage de production audiovisuelle. L'attrait pour de tels services est relié, d'une part, à la qualité de restitution des contenus, et, d'autre part, à la puissance du moteur de recherche, bien adapté à la nature des médias diffusés. En effet, l'on peut constater que procéder à l'augmentation de la quantité d'information disponible n'est plus suffisant car il devient crucial de faciliter l'accès à celle-ci ;

■ à la production audiovisuelle ; les techniques de production audiovisuelle modernes font de plus en plus appel à la composition de fonds divers et d'objets vidéo en avant-plan pour l'élaboration des scènes de films ou de télévision. Actuellement, le tournage d'objets vidéo est une opération particulièrement lourde, nécessitant le recours à la technique de clé chromatique, désignée par "*chroma-key*" en langage anglo-saxon, cette technique imposant en particulier de filmer tout objet d'intérêt sur un fond uniforme de couleur connue. Le procédé objet de l'invention, permettant une segmentation d'images par objets élémentaires particulièrement souple et rapide, permet de réduire fortement les coûts de production ;

■ à la télévision interactive, encore désignée télévision enrichie, domaine dans lequel, grâce au procédé objet de l'invention et en raison de la flexibilité et de la robustesse de ce dernier, sur un nombre d'images important d'objets mobiles, il est possible de sélectionner un objet ou un acteur présent sur l'écran, de suivre ce dernier dans le temps, au cours du déroulement de l'action, ainsi que de disposer d'informations multimédia sur cet objet ou cet acteur ;

■ aux outils de création de contenu multimédia satisfaisant au standard MPEG-4. Le standard précité ne fournit pas de méthode de segmentation d'images par objets élémentaires. Le procédé objet de la présente invention permet d'introduire un processus de segmentation, prolongement naturel d'un tel environnement ;

■ à la visiophonie. Lorsque le débit de transmission devient trop limité, en raison de l'encombrement des réseaux de transmission, il est du plus haut intérêt de concentrer l'information visuelle transmise, et donc le débit disponible pour en assurer l'acheminement, sur des objets ou des zones d'images les plus porteurs d'informations, en particulier le visage des locuteurs, la concentration précitée pouvant être mise en oeuvre grâce au procédé de segmentation objet de la présente invention ;

■ aux services de visioconférence, où, outre les applications inhérentes à la visiophonie, les applications dans lesquelles on recherche une augmentation de la sensation visuelle de présence par reconstitution synthétique d'une réunion virtuelle rassemblant en un même lieu virtuel l'ensemble des participants à la visioconférence sont facilitées, grâce au procédé de segmentation objet de l'invention.

Le procédé objet de la présente invention sera mieux compris à la lecture de la description et à l'observation des dessins ci-après dans lesquels :

- la figure 1a représente, à titre illustratif, un organigramme général des étapes permettant la mise en oeuvre du procédé objet de la présente invention ;
- la figure 1b représente, à titre illustratif, un détail de mise en oeuvre du procédé objet de la présente invention illustré en figure 1a et consistant à créer, à partir de noeuds définis sur un contour de départ, soit un contour actif d'origine, soit un contour actif courant ;
- la figure 2a représente, à titre illustratif, un mode de mise en oeuvre préférentiel non limitatif du procédé objet de l'invention dans lequel une gestion de l'existence d'intersections et de la résolution appliquée au contour actif courant est introduite ;

- la figure 2b représente, à titre illustratif, un détail de mise en oeuvre d'une étape du procédé objet de l'invention illustré en figure 2a, dans laquelle une initialisation du domaine de calcul de gradient d'intensité d'image sur chaque contour actif courant est réalisée ;
- la figure 2c représente, à titre illustratif, un détail de mise en oeuvre spécifique d'une étape de gestion de l'existence d'intersections sur tout contour actif courant ;
- la figure 3a représente, à titre illustratif, un organigramme général d'un processus d'estimation de mouvement appliqué à un contour actif courant conformément au procédé objet de la présente invention et permettant d'assurer la poursuite d'un objet mobile sur une pluralité d'images successives, telles que des images vidéo ou de télévision ;
- la figure 3b représente, à titre illustratif, un mode de réalisation préférentiel non limitatif d'une étape d'affinage du contour actif courant relatif à un objet en mouvement telle que représentée en figure 3a ;
- la figure 3c montre, à titre illustratif, les parties de l'objet sur lesquelles sont réalisées l'estimation de mouvement ;
- la figure 3d est semblable à la figure 3c sur un exemple réel composé de deux personnages acteurs d'une scène de ballet ;
- la figure 4 représente, à titre illustratif, une suite d'images vidéo relatives à une scène de ballet jouée par deux acteurs qui montre l'évolution du contour actif courant et dans laquelle le contour actif final se dédouble, respectivement s'unifie ;
- la figure 5 représente, à titre illustratif, un organigramme relatif à un protocole de recherche d'un objet élémentaire d'intérêt dans une séquence d'images mémorisées dans une base de données accessible sur un site serveur à partir d'un terminal d'accès.

Le procédé de segmentation d'une image vidéo par objets élémentaires, objet de la présente invention, sera maintenant décrit en liaison avec la figure la et les figures suivantes.

D'une manière générale, on rappelle que le procédé objet de l'invention est mis en oeuvre à partir d'au moins une image IM, telle qu'une image vidéo, mais de préférence à partir d'une séquence d'images comportant au moins un objet élémentaire, noté OBJ, animé ou non et délimité par un contour naturel, noté CN.

Le procédé objet de la présente invention est basé sur le fait que tout objet élémentaire OBJ présent dans une image, notamment une image vidéo, présente un contour naturel CN dont la trace se traduit sur l'image considérée par des valeurs d'intensité lumineuse présentant sensiblement une discontinuité tout le long de cette dernière, cette discontinuité ayant pour effet d'introduire une notion d'intensité différentielle vis-à-vis de l'objet lui-même et de l'environnement direct de cet objet, et, en particulier, une valeur de gradient d'intensité lumineuse sur le contour naturel de l'objet, et donc sur cette trace, présentant une valeur sensiblement stable.

Le procédé objet de la présente invention, compte tenu de la remarque précitée, a ainsi pour objet, à partir d'un contour de départ absolument quelconque entourant toutefois cet objet, de rechercher, par déformation de ce contour de départ, par contraction de ce dernier vers l'objet précité, une stabilité en position du contour actif sur le contour naturel de l'objet.

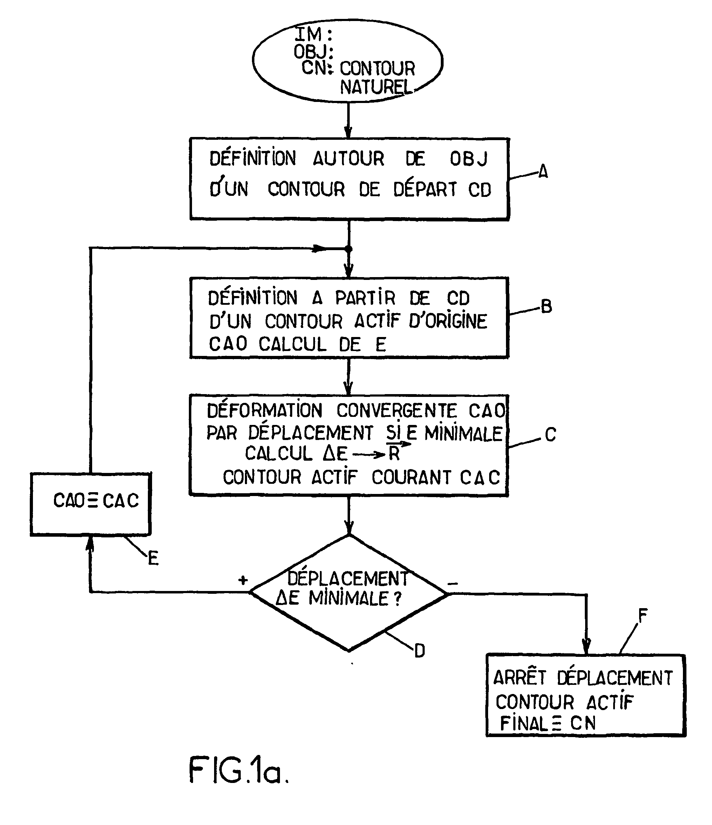

Dans ce but, et ainsi que représenté sur la figure 1a, à partir d'une image vidéo IM ou d'une pluralité d'images successives vis-à-vis d'un objet élémentaire OBJ présentant un contour naturel CN à une étape de départ S, le procédé objet de la présente invention consiste, en une étape A, à définir autour de l'objet élémentaire précité OBJ, un contour de départ, noté CD, entourant totalement l'objet élémentaire OBJ.

En ce qui concerne la définition du contour de départ CD, on indique bien entendu que l'image IM disponible sous forme d'image vidéo, et donc sous forme d'un fichier image, peut avantageusement être affichée sur un système d'affichage, non représenté au dessin en figure 1a, tel qu'un écran vidéo muni d'une interface graphique et d'un pointeur. Dans ces conditions, et de manière particulièrement simple, l'image étant affichée sur le moniteur d'affichage précité, un utilisateur peut aisément, à partir d'un dispositif de pointage, tracer autour de l'objet OBJ tout contour de départ CD entourant l'objet précité de la manière la plus aisée.

L'étape A précitée est alors suivie d'une étape B consistant à définir, à partir du contour de départ CD, un contour actif d'origine, noté CAO, formé par un ensemble de noeuds distribués sur ce contour de départ.

L'étape B est alors suivie d'une étape C de déformation convergente du contour actif d'origine CAO par déplacement d'au moins l'un des points du contour actif d'origine CAO vers l'objet élémentaire OBJ, et en particulier vers le contour naturel de l'objet élémentaire.

Conformément à un aspect remarquable du procédé objet de l'invention, la déformation du contour actif d'origine CAO est effectuée par déplacement vers le contour naturel de l'objet élémentaire d'au moins un des noeuds du contour actif d'origine, ce déplacement étant normal et centripète au contour d'origine CAO, fonction de l'énergie élastique (ou terme de ressort) obtenue à partir de la distance des noeuds adjacents au noeud courant et contrôlé par une fonction de blocage sur l'image des contours, obtenue à partir de l'intensité mesurée le long des segments adjacents au noeud courant.

La déformation du contour actif d'origine CAO permet d'engendrer un contour actif courant, noté CAC, lequel est alors soumis itérativement à la déformation convergente précitée pour engendrer des contours actifs courants successifs distincts tant que le déplacement et la déformation ne satisfont pas à la condition de blocage pour tous les noeuds du contour.

Le contour actif final reproduit sensiblement le contour naturel CN de l'objet élémentaire OBJ.

Sur la figure 1a, on a représenté à l'étape C l'opération de déformation précédemment décrite pour engendrer un contour actif courant.

Bien entendu, à l'étape B, c'est-à-dire dès la création du contour de départ CD, et à partir du tracé de celui-ci, et de la définition du contour actif d'origine CAO, un calcul de la fonction d'énergie E est réalisé, cette fonction d'énergie étant liée au gradient d'intensité lumineuse calculé sur le contour actif d'origine CAO, ainsi qu'il sera décrit ultérieurement dans la description.

De même, à l'étape C, l'application d'une déformation convergente par déplacement d'au moins un point ou noeud du contour actif d'origine CAO, permet de calculer une variation d'énergie ΔE d'énergie élastique minimale, pour le contour actif courant CAC obtenu du fait de la déformation appliquée.

L'étape C peut alors être suivie d'une étape de test D consistant à vérifier que la variation d'énergie ΔE est minimale.

Sur réponse positive au test D, le processus de déformation est ré-enclenché par itération, par l'intermédiaire d'un retour à l'étape B, le contour actif courant CAC étant toutefois pris comme contour actif d'origine CAO pour l'itération suivante. Sur la figure 1a, l'itération est initiée par l'étape E, laquelle est notée :

$$CAO \equiv CAC.$$

Par cette opération, on comprend en fait que le processus de déformation convergente appliqué à partir de l'étape B, dans laquelle le contour actif d'origine CAO a été remplacé par le contour actif courant CAC de l'itération précédente, peut alors être réappliqué par l'intermédiaire de l'étape C et de l'étape D précédemment décrites.

Le processus de déformation est alors appliqué itérativement tant qu'il y a déplacement, ce qui permet aux contours actifs courants successifs de se rapprocher du contour naturel de l'objet CN.

Dans ces conditions, à une étape F, tout déplacement étant arrêté, le contour actif courant CAC de l'itération précédente correspond à un contour actif final qui n'est autre que le contour naturel de l'objet OBJ sensiblement.

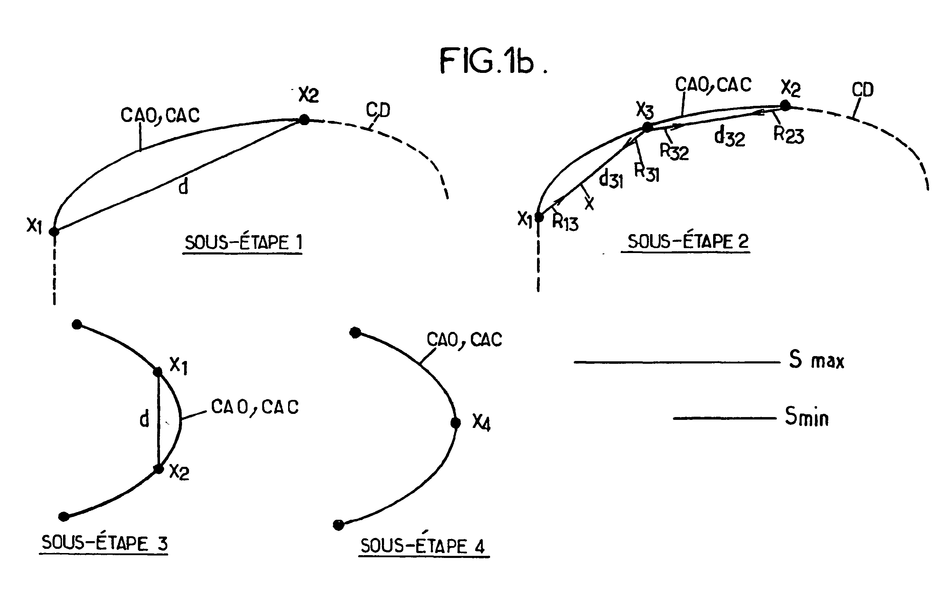

Une description plus détaillée de l'étape B de définition, soit d'un contour actif d'origine CAO à partir du contour de départ CD, soit le cas échéant d'un contour actif courant CAC, sera maintenant donnée en liaison avec la figure 1b.

D'une manière générale, on indique que l'ensemble des noeuds de chaque contour actif, contour actif d'origine CAO, respectivement contour actif courant CAC, peut avantageusement être défini par modélisation polygonale par échantillonnage sur la trace du contour actif, contour actif d'origine CAO, respectivement contour actif courant CAC, en fonction de la distance entre noeuds consécutifs.

Ainsi, en référence à la figure 1b, et pour un contour de départ CD par exemple, destiné à engendrer un contour actif d'origine CAO, on considère deux noeuds consécutifs, notés $X_1$ et $X_2$, et on mesure la longueur du segment d entre les noeuds $X_1$ et $X_2$. Cette opération est représentée à la sous-étape 1. Pour conserver comme noeud un noeud $X_2$ voisin d'un premier noeud $X_1$ en fonction de la valeur de la distance d précitée, on introduit deux valeurs de seuil Smax et Smin vérifiant la relation :

$$Smin < Smax$$

et

$$Smin = Smax/2.$$

On indique que, d'une manière générale, les valeurs de seuil précitées, désignées par valeurs de seuil d'échantillonnage polygonal, peuvent être définies par l'utilisateur. Toutefois, et de manière non limitative, les valeurs de seuil d'échantillonnage polygonal peuvent être effectuées de manière sensiblement automatique à partir de dimensions de référence choisies en fonction de la taille de l'objet élémentaire.

Si la longueur du segment d excède la valeur de seuil Smax, ainsi que représenté à la sous-étape 2, alors un noeud intermédiaire $X_3$ est ajouté sensiblement au droit du milieu du segment d sur le contour de départ CD. Le noeud $X_3$ est alors pris en compte et inséré entre les noeuds $X_1$ et $X_2$ pour constituer en fait le contour actif d'origine CAO, le cas échéant le contour actif courant CAC.

Toutefois, et de manière non limitative, des méthodes plus sophistiquées d'échantillonnage et de modélisation polygonale peuvent être mises en oeuvre, telles que méthodes d'interpolation ou de lissage (spline, à titre d'exemple), afin d'ajouter des contraintes différentielles sur le contour actif d'origine, respectivement le contour actif courant.

Si au contraire, la longueur du segment d est inférieure à la valeur Smin, le segment correspondant est alors fusionné, les noeuds $X_1$ et $X_2$ étant alors ramenés en un noeud unique résultant $X_4$ représenté à la sous-étape 4, positionné sensiblement au droit du milieu du segment de longueur d sur le contour de départ ou sur le contour actif d'origine CAO, respectivement le contour actif courant CAC. Une position interpolée autre que celle correspondant au milieu du segment de longueur d peut être utilisée. Bien entendu, les noeuds $X_1$ et $X_2$ sont alors supprimés et remplacés par le seul noeud $X_4$, ainsi que représenté à la sous-étape 4.

Le processus de modélisation polygonale par échantillonnage tel que représenté aux sous-étapes 1 à 4 de la figure 1b est réitéré pour un contour actif d'origine CAO, respectivement un contour actif courant CAC jusqu'à ce que la distance entre deux noeuds consécutifs de l'ensemble des noeuds retenus pour constituer le contour actif d'origine CAO, respectivement le contour actif courant CAC, soit comprise dans l'intervalle défini par les valeurs de seuil d'échantillonnage polygonal.

On dispose ainsi, ainsi que représenté à la sous-étape 2, d'un contour actif courant CAC ou d'un contour actif d'origine CAO modélisé par l'ensemble des segments tels que représentés sur la figure 1b à la sous-étape précitée, segments successifs $d_{31}$, $d_{32}$, et ainsi de suite sur l'ensemble du tracé du contour actif d'origine, respectivement du contour actif courant.

Une description plus détaillée du mode de calcul de la fonction de blocage sera maintenant donnée ci-après.

Pour une zone élémentaire de l'image constituée par un rectangle comportant un nombre déterminé de pixels dans la direction horizontale, respectivement verticale, on calcule un gradient d'intensité lumineuse dans les directions horizontale, respectivement verticale, le gradient d'intensité lumineuse ou de luminance vérifiant la relation (1) :

$$\text{GR}\begin{cases} I_x(i,j) = \dfrac{I(i+1,j) - I(i-1,j)}{2} \\[2em] I_y(i,j) = \dfrac{I(i,j+1) - I(i,j-1)}{2} \end{cases}$$

Dans la relation précédente, $I_x(i,j)$ désigne la valeur du gradient d'intensité lumineuse ou de luminance dans la direction horizontale, et $I_y(i,j)$ désigne la valeur du gradient d'intensité lumineuse dans la direction verticale pour tout pixel de coordonnées i,j dans la zone rectangulaire de pixels considérée par rapport aux pixels adjacents d'adresse i+1, i-1, respectivement j+1 et j-1.

La norme N du gradient GR est alors donnée par la relation (2) :

$$N = \sqrt{I_x^2(i,j) + I_y^2(i,j)}$$

à partir des gradients dans les directions verticale et horizontale précitées.

Conformément à un aspect remarquable du procédé objet de la présente invention, la force d'un contour actif est mesurée par la norme N du gradient tel que calculé précédemment.

Pour évaluer la force d'un contour actif, contour actif d'origine CAO, respectivement contour actif courant CAC, pour chaque noeud X du contour actif, les contributions du gradient d'intensité lumineuse sont évaluées respectivement sur les deux segments adjacents au noeud considéré, c'est-à-dire sur les segments $d_{31}$ et $d_{32}$ pour les noeuds successifs représentés à la sous-étape 2 de 1a figure 1b.

Les segments précités étant définis uniquement par leurs deux extrémités, les positions des points intermédiaires sont sur l'image calculées par l'algorithme de BRESENHAM.

Pour chaque noeud d'un segment tels que les noeuds $X_1$, $X_3$ ou $X_2$ représentés à la figure 1b précitée, on prélève la contribution dans l'ensemble des valeurs de gradient GR mémorisées, cet ensemble étant désigné par la carte des gradients. La contribution pour le noeud considéré est alors pondérée par une fonction de forme valant 1 sur le noeud courant et décroissante linéairement vers la valeur 0 sur le noeud adjacent. Toutes les contributions de gradient sur le segment considéré sont additionnées. Les valeurs associées à chaque segment sont stockées dans un vecteur.

Ainsi, en référence à la figure 1b, pour la sous-étape 2, et pour des noeuds consécutifs $X_1$ et $X_3$ du contour

actif séparés par le segment $d_{31}$, la fonction de pondération p relative au point courant x appartenant au segment $d_{31}$ de modélisation polygonale du contour actif CAO ou CAC, vérifie la relation (3) :

$$p(X) = 1 - d(X,X_1)/d(X_3,X_1)$$

Dans la relation précédente, $X_1$ et $X_3$ sont des noeuds consécutifs, X désigne le point courant appartenant au segment formé par X1 et X3, et d(Xa,Xb) désigne la distance entre les noeuds Xa et Xb.

La fonction ou fonctionnelle d'énergie élastique représentative de la distance séparant chaque noeud d'un noeud voisin vérifie alors la relation (4) :

$$E = k \cdot \left[ (X - X_p)^2 + (X - X_s)^2 \right]$$

Dans la relation précédente, X, Xp et Xs sont respectivement des vecteurs de dimension 2 contenant les coordonnées du noeud courant, du noeud précédent et du noeud suivant. k représente un terme de raideur, dit terme de ressort, correspondant à l'énergie élastique représentative de la distance séparant chaque noeud d'un noeud voisin.

Ainsi, on dispose d'un terme de ressort, fonction de la dérivée de l'énergie E, et correspondant à une variation d'énergie $\Delta E$ pour le noeud X courant considéré sur le contour actif d'origine CAO, respectivement le contour actif courant CAC.

Le terme de ressort vérifie la relation (5) :

$$\tilde{R} = k \cdot \left[ (X_p - X) + (X_s - X) \right]$$

Dans cette relation, $X_p$, $X_s$ et X désignent les mêmes paramètres que dans le cas de la relation (4), k désignant également une constante de raideur.

Le terme de ressort $\vec{R}$ tend à minimiser l'énergie E qui se traduit en un lissage dont la force est pondérée par le terme de raideur k. Ce terme est un terme de régulation évitant les dégénérescences et qui supprime notamment la formation de plis.

On indique que le terme de ressort $\vec{R}$ est une grandeur orientée, supportée par le segment joignant deux noeuds consécutifs et supportée par ce dernier. Sur la figure 1b à la sous-étape 2, on a noté les termes de ressort $\vec{R}_{13}$, $\vec{R}_{31}$, $\vec{R}_{32}$, $\vec{R}_{23}$.

Conformément à un aspect remarquable du procédé objet de la présente invention, la déformation appliquée à chaque contour actif d'origine CAO, respectivement contour actif courant CAC, est effectuée par un déplacement d'au moins l'un des noeuds constitutifs du contour actif d'origine, respectivement du contour actif courant considéré, compte tenu d'une relation liant, d'une part, le terme de ressort $\vec{R}$ précité, le déplacement proprement dit, dans une direction centripète vers l'objet élémentaire et bien entendu un terme d'énergie lumineuse lié au gradient et désigné par la contribution du gradient sur le contour actif d'origine CAO, respectivement le contour actif courant CAC, ainsi qu'il sera décrit ci-après.

Pour chaque noeud du contour actif considéré, contour actif d'origine CAO, respectivement contour actif courant CAC, la valeur du gradient d'intensité lumineuse est prise en compte sur l'ensemble de chaque segment placé de part et d'autre du noeud considéré, la contribution G du gradient d'intensité lumineuse GR sur chaque segment considéré étant évaluée à partir d'une sommation de la norme du gradient pondérée par la fonction de pondération précédemment mentionnée dans la description.

Ainsi, la contribution du gradient sur un segment donné, segment modélisant par modélisation polygonale le contour actif considéré, vérifie alors la relation (6) :

$$G = \sum_d p(X).N(X)$$

Dans la relation précédente, X, p(X) et N(X) désignent respectivement le point courant, la pondération associée à ce point X et la norme du gradient calculée en ce point.

Ainsi, sur la figure 1b, à la sous-étape 2, d prend la valeur d31 et X se déplace du noeud X1 vers le noeud X3 sur le segment d31.

La relation liant la contrainte de déplacement F appliquée en chaque noeud ou en au moins un noeud du contour actif d'origine CAO, respectivement du contour actif courant CAC, sera maintenant décrite lorsque le déplacement du noeud considéré est effectué dans la direction normale N au contour actif au niveau du noeud considéré.

Pour calculer la direction normale au noeud considéré, une heuristique est utilisée, afin d'affecter un vecteur normal au contour actif précité. En référence à la figure 1b, et à titre d'exemple non limitatif, pour le noeud $X_3$ dont les noeuds adjacents sont les noeuds $X_1$ et $X_2$, on calcule le vecteur normal $N_1$ au segment $d_{31}$ et le vecteur normal $N_2$ au segment $d_{32}$. La moyenne ou résultante des vecteurs normaux $N_1$ et $N_2$ normalisés fournit la direction du vecteur normal $N_3$ résultant au noeud $X_3$. Le vecteur $N_3$ correspondant à un vecteur de déplacement $\vec{N}$ est alors orienté vers l'intérieur de l'objet, à partir par exemple d'un calcul de concavité du tracé supportant le contour actif d'origine CAO, respectivement le contour actif courant CAC. D'autres modes de calcul à base d'interpolations spline ou autres peuvent être mis en oeuvre pour l'estimation du vecteur normal $\vec{N}$.

Ainsi, pour tout vecteur normal $\vec{N}$ et pour un terme de ressort $\vec{R}$, la contrainte de déplacement $\vec{F}$ appliquée selon le vecteur de déplacement $\vec{N}$ en au moins l'un des noeuds du contour actif d'origine, respectivement du contour actif courant, est donnée par la relation (7) :

$$\vec{F} = \left(\vec{R} + \vec{N}\right)\prod(G < S)$$

Dans la relation précédente, on indique que le terme $\prod(G<S)$ est une fonction spécifique telle que cette fonction est égale à 1 si G < S, et égale à 0 sinon, S désignant une valeur de seuil prédéfinie par l'utilisateur et G désignant la contribution du gradient au noeud considéré.

Ainsi, la relation (7) précitée définit la condition de blocage du déplacement des noeuds par la fonction $\prod$ (G<S). Si cette fonction est égale à 1, le déplacement du ou des noeuds du contour actif courant de la valeur $\vec{F}$ résultante est réalisé et si cette fonction est égale à zéro le déplacement est stoppé.

Ainsi, si la contribution du gradient G pour le noeud courant considéré est inférieure à la valeur de seuil S précitée, le noeud, et bien entendu, le cas échéant, l'ensemble des noeuds constitutifs du contour actif d'origine CAO, respectivement du contour actif courant CAC, est déplacé de la valeur de la contrainte de déplacement $\vec{F}$ dans la direction centripète définie pour le noeud considéré.

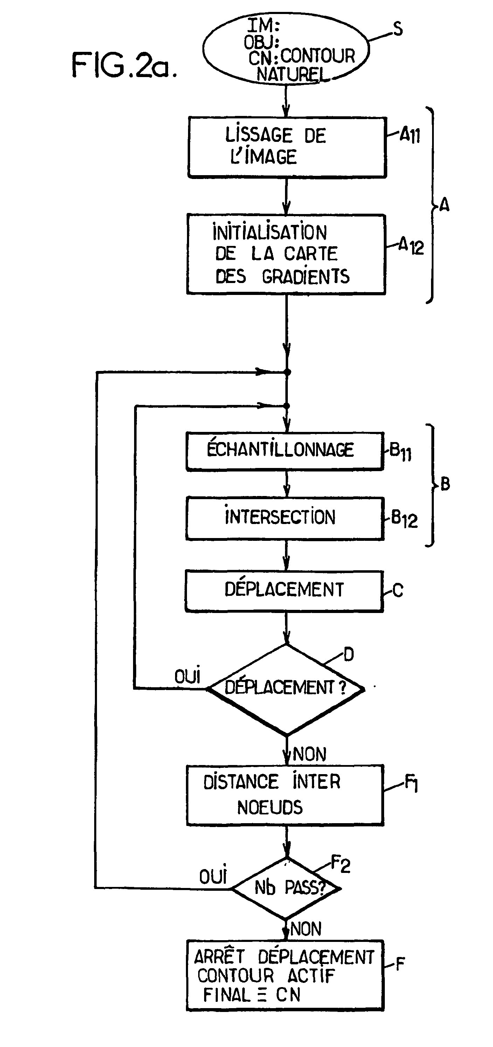

Une description plus détaillée d'un mode de mise en oeuvre préférentiel du procédé objet de la présente invention sera maintenant donnée en liaison avec la figure 2a. Dans la figure précitée, les mêmes étapes, telles que définies à la figure 1a, sont désignées par les mêmes références.

En ce qui concerne l'étape A consistant en la définition autour de l'objet OBJ d'un contour de départ CD, celle-ci, ainsi que représenté sur la figure 2a précitée, peut comporter avantageusement une sous-étape $A_{11}$ consistant en une opération de lissage de l'image au moyen d'un processus de filtrage. Ainsi, l'image vidéo courante est filtrée dans le but de limiter le bruit ambiant présent dans cette image et d'obtenir des contours plus étalés. Le filtrage utilisé peut consister en un processus de filtrage classique de suppression de bruit en fonction de la nature des données constitutives de l'image. Pour cette raison, le processus de filtrage ne sera pas décrit plus en détail.

La sous-étape $A_{11}$ peut alors être suivie d'une sous-étape $A_{12}$ consistant, à partir du contour de départ CD, en une initialisation du calcul des valeurs de gradient pour une zone déterminée de l'image. On comprend en particulier que pour limiter les temps de calcul, les valeurs de gradient données par les relations (1) et (2) précédentes ne sont calculées uniquement que sur la région enfermée par le contour de départ CD, puis par les contours actifs courants successifs jusqu'à bien entendu l'atteinte par le contour actif courant CAC du contour actif final correspondant au contour naturel de l'objet. Les valeurs de calcul de la norme du gradient sont alors mémorisées dans une carte de gradients. Les valeurs précitées peuvent être calculées en niveau de gris ou en couleur. A titre d'exemple non limitatif, on indique que la carte de gradients est une image de valeurs flottantes initialisées à une valeur arbitraire par exemple.

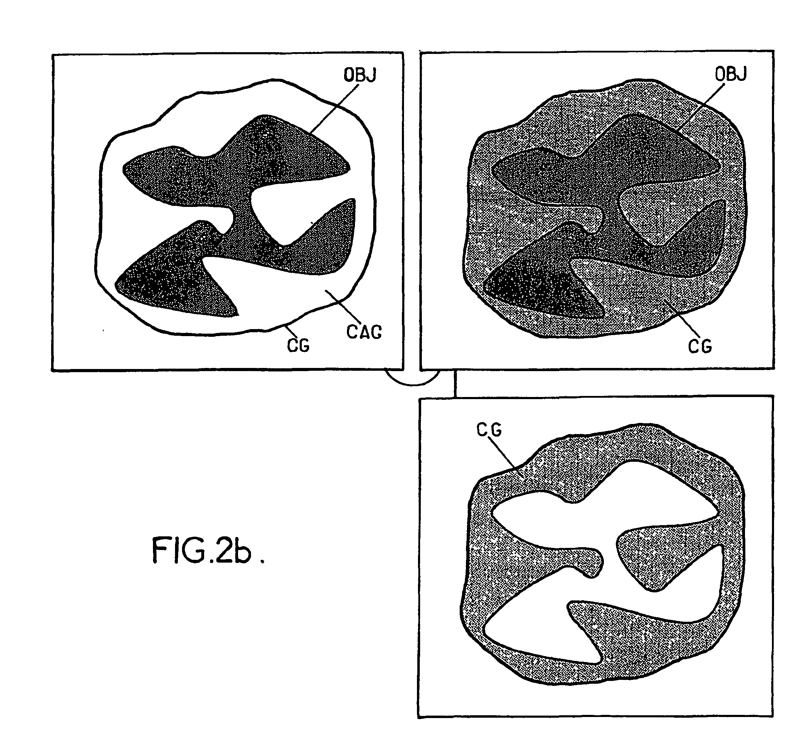

Sur la figure 2b, on a représenté des vues successives sur un moniteur d'affichage d'une image vidéo comprenant un objet OBJ, un contour actif d'origine CAO ou un contour actif courant CAC, et une zone dans laquelle la carte des gradients CG est calculée. On comprend en particulier que la carte des gradients est calculée dans une zone intermédiaire au contour actif courant et au contour naturel de l'objet CN, cette zone étant représentée en grisé sur la figure 2b.

En ce qui concerne l'étape B de définition à partir du contour de départ CD d'un contour actif d'origine CAO, on indique que celle-ci peut être également subdivisée en une première sous-étape $B_{11}$ consistant à effectuer l'échantillonnage pour modélisation polygonale du contour considéré, ainsi que représenté à la figure 1b, la sous-étape $B_{11}$ pouvant alors avantageusement être suivie d'une sous-étape $B_{12}$ de détection des intersections sur le contour actif, contour actif d'origine CAO, respectivement contour actif courant CAC. La sous-étape $B_{12}$ peut avantageusement être mise en oeuvre lorsque l'objet élémentaire est constitué par un objet animé dans l'image, et donc susceptible de mouvement, de déformation et de partition, pour tout contour actif susceptible de constituer une boucle présentant au moins un point d'intersection suite à une partition, une déformation de cet objet élémentaire en composantes d'objet élémentaire.

Lorsqu'une intersection est détectée, le contour actif, contour actif d'origine, respectivement contour actif courant, est alors scindé et regroupé en un nombre de contours actifs distincts égal au nombre d'intersections augmenté d'une unité, afin de permettre d'affecter un contour actif final à chaque composante de l'objet élémentaire précité.

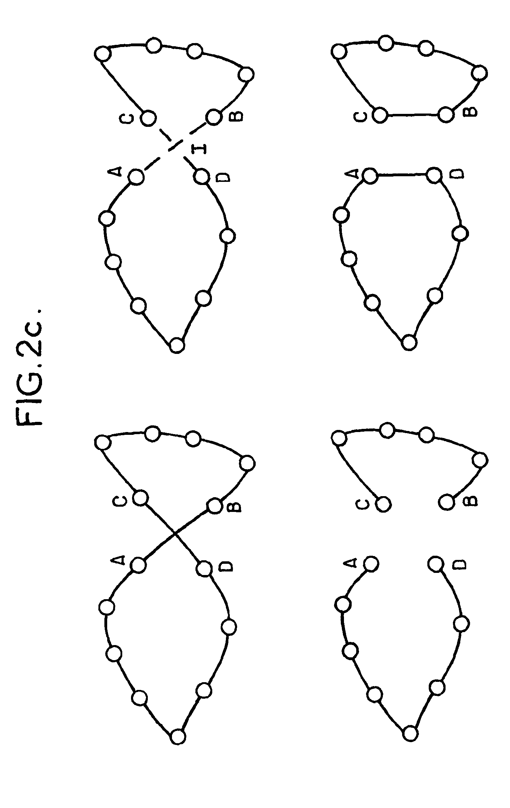

Un mode opératoire spécifique permettant la mise en oeuvre de la sous-étape $B_{12}$ de détection des intersections sera maintenant décrit en liaison avec la figure 2c.

En référence à la figure précitée, on indique qu'un contour actif évolue au cours du temps, compte tenu des modifications de forme ou de partition de l'objet, ce qui entraîne pour conséquence que des boucles peuvent apparaître au sein du contour actif.

D'une manière générale, on indique que les auto-intersections du contour actif, contour actif d'origine CAO, respectivement contour actif courant CAC, sont mesurées sur tous les segments pris deux à deux, les segments étant formés entre deux noeuds consécutifs définissant chaque contour actif.

Ainsi, pour A, B, C et D désignant quatre noeuds constituant respectivement les segments AB et CD, on obtient alors AB = A+r(B-A) et CD = C+s(D-C).

Une intersection est alors détectée entre les segments AB et CD si r et s appartiennent à l'intervalle [0,1]. On calcule donc les valeurs de r et de s au moyen de la relation (8) suivante :

$$r = \frac{(A_y-C_y).(D_x-C_x)-(A_x-C_x).(D_y-C_y)}{(B_x-A_x).(D_y-C_y)-(B_y-A_y).(D_x-C_x)}$$

$$s = \frac{(A_y-C_y).(B_x-A_x)-(A_x-C_x).(B_y-A_y)}{(B_x-A_x).(D_y-C_y)-(B_y-A_y).(D_x-C_y)}$$

Dans la relation précédente, les index x et y associés aux lettres A, B, C, et D désignent respectivement l'ordonnée et l'abscisse de ces lettres.

Dans le cas de l'existence d'une intersection entre les noeuds A, B et C, D sur la figure 2c, le contour actif courant, respectivement d'origine, est divisé en plusieurs contours actifs selon la règle de division précédemment citée. Dans le cas de l'existence d'une intersection, à titre d'exemple non limitatif, au noeud I appartenant aux segments AB et CD sur la figure 2c, le noeud A est déconnecté du noeud B et il en est de même pour le noeud C vis-à-vis du noeud D. Ensuite, le noeud A et le noeud C sont connectés au noeud D, respectivement au noeud B. On rappelle que la notion de connexion consiste à constituer chaque contour actif, contour actif d'origine, contour actif courant, sous forme d'une liste de noeuds fermée.

L'étape précitée est un processus récursif comprenant la création d'un nouveau contour actif, l'ajout des noeuds compris entre les noeuds B et C dans ce nouveau contour actif et la suppression simultanée de ces mêmes noeuds dans le contour actif courant. Si le nouveau contour actif n'est pas dégénéré, c'est-à-dire s'il comporte au moins plus de deux noeuds, alors, il est mémorisé sous forme d'un méta-snake représentant un vecteur de contours actifs, ces derniers étant eux-mêmes stockés sous la forme d'une liste de noeuds. Un contour actif est sensé approximer les contours extérieurs d'un objet. La fonction récursive précitée est appelée de nouveau jusqu'à l'absence d'intersection. Des processus de détection d'intersection différents peuvent être mis en oeuvre sans sortir du cadre de l'objet de la présente invention.

L'étape D consistant à effectuer le test de déplacement minimal peut avantageusement, ainsi que représenté en figure 2a, sur réponse négative au test précité, être suivie d'une étape $F_1$ visant à modifier la valeur de la résolution de définition du contour actif courant CAC. En effet, par une augmentation de la résolution précitée, se traduisant par une diminution de la distance inter-noeuds et une augmentation du nombre de noeuds constitutifs du contour actif courant considéré CAC, il est possible de relancer le processus par l'intermédiaire d'une étape de comparaison $F_2$ sur le nombre de passages, une réponse positive à l'étape $F_2$ permettant le retour à l'étape B sur la base d'un contour actif courant CAC dont la résolution a été augmentée à l'étape $F_1$.

En ce qui concerne l'augmentation de la résolution, à l'étape $F_1$, on indique que celle-ci peut être effectuée ainsi que décrit précédemment dans la description en liaison avec la figure 1b, et en particulier par modification des valeurs de seuil d'échantillonnage polygonal Smax et Smin.

Au contraire, sur réponse négative à l'étape de test F$_2$, l'étape d'arrêt de déplacement de contour actif final F est alors appelée, le contour actif final étant réputé correspondre au contour naturel de l'objet élémentaire d'intérêt.

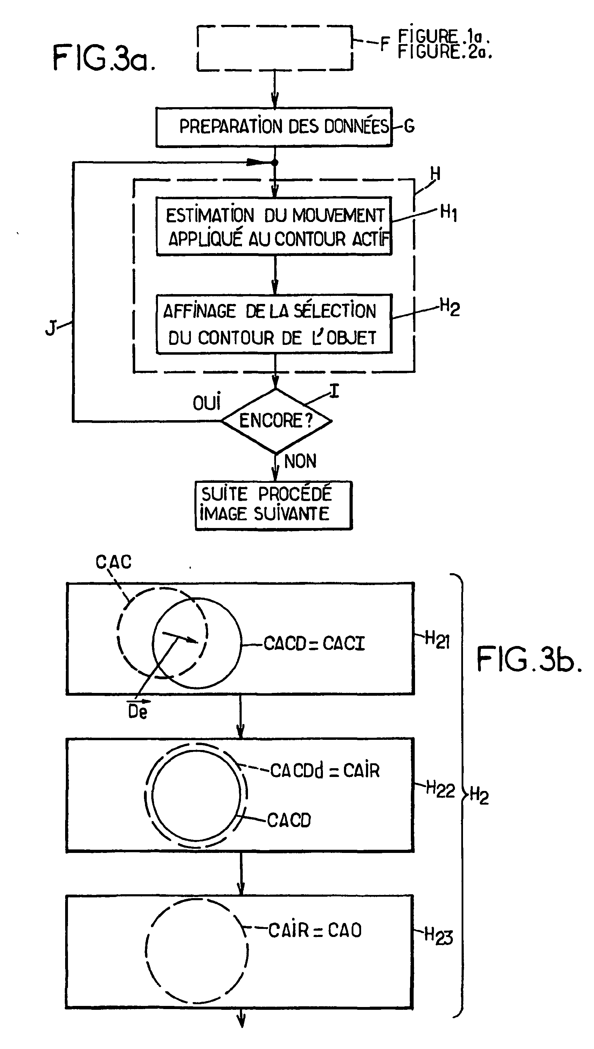

Une description plus détaillée d'un processus de poursuite d'un objet élémentaire constitué par un objet animé mobile dans l'image, permettant la mise en oeuvre du procédé objet de la présente invention sera maintenant donnée en liaison avec la figure 3a et les figures suivantes.

D'une manière générale, on indique que le procédé objet de la présente invention doit permettre de suivre ou de poursuivre l'objet élémentaire compte tenu du fait que celui-ci est susceptible de se déformer, de tourner et, de manière plus générale, de se déplacer au cours du temps, c'est-à-dire d'une image à la suivante, sur une séquence d'images vidéo par exemple.

Dans le cadre de la mise en oeuvre du procédé objet de la présente invention, on considère que l'utilisateur a sélectionné un objet élémentaire d'intérêt, c'est-à-dire que l'étape B de la figure la a été mise en oeuvre, et, en outre, que l'acquisition de l'objet élémentaire d'intérêt a été effectuée, c'est-à-dire que l'étape F de la figure 1a ou 1b a été réalisée, le contour final épousant de manière satisfaisante l'objet élémentaire d'intérêt.

Ainsi que représenté à la figure 3a, le procédé objet de la présente invention consiste alors, en une étape G dite de préparation des données, réalisée sur l'image courante, par construction du masque de l'objet délimité par le contour actif final ou d'une bande, appelée couronne, englobant les noeuds du contour actif considéré, la couronne étant une différence des régions englobées par deux dilatations du contour actif ou par des dilatations successives d'une image binaire initialisée avec ce contour actif.

L'étape G est elle-même suivie d'une étape H consistant à effectuer sur la couronne, une estimation de mouvement permettant de déplacer les noeuds du contour actif ou les pixels de la couronne suivant un vecteur de mouvement estimé.

Un test I peut être prévu de manière à réitérer l'estimation de mouvement, par retour J à l'estimation de mouvement antérieurement à l'étape H. Le test I peut correspondre par exemple en une estimation de mouvement sur un nombre supérieur à deux images, par exemple, en fonction du choix de l'utilisateur, ainsi qu'il sera décrit ultérieurement dans la description.

Sur réponse négative au test I, l'estimation du mouvement n'étant pas réitérée, le vecteur de mouvement ou de déplacement est alors appliqué au contour actif considéré, afin de permettre d'assurer le suivi de l'objet élémentaire mobile par le contour actif final et de discriminer l'objet élémentaire mobile précité, compte tenu du mouvement de ce dernier dans l'image suivante. On comprend en particulier que, pour l'image suivante, le procédé objet de la présente invention peut être réitéré pour réaliser l'étape B de la figure 1a ou de la figure 2a, puis l'étape C de déformation par déplacement sous condition de blocage pour tous les noeuds du contour.

Toutefois, ainsi que représenté sur la figure 3a, l'étape H d'estimation du mouvement peut être mise en oeuvre selon deux sous-étapes, une première sous-étape H$_1$ d'estimation du mouvement proprement dit appliqué au contour actif dilaté, ainsi que mentionné précédemment, suivie d'une sous-étape H$_2$ consistant à affiner la segmentation de l'image, c'est-à-dire de la sélection du contour de l'objet élémentaire.

En ce qui concerne le calcul de l'estimation du mouvement proprement dit, les indications théoriques ci-après seront explicitées.

La méthode d'estimation de mouvement proprement dite, mise en oeuvre à l'étape H$_1$ par exemple, peut être basée sur une structure multirésolution estimant le mouvement global d'un objet constitué par le contour actif courant CAC, par un modèle de translation ou un modèle affine. La multirésolution est obtenue en filtrant successivement les images, ce processus permettant d'accélérer la convergence de la solution et rendant celle-ci plus robuste.

Les équations de transformation par un modèle d'estimation de mouvement sont les suivantes, et vérifient la relation (9) :

Translation :

$$\begin{cases} x' = x + dx \\ y' = y + dy \end{cases}$$

Transformation affine :

$$\begin{cases} x' = a_1 x + a_2 x + a_3 \\ y' = a_4 x + a_5 y + a_6 \end{cases}$$

Dans la relation précédente, x et y désignent les coordonnées d'un point M(x,y) de l'image courante transformé du fait du mouvement de l'objet élémentaire en un point M'(x',y') de coordonnées x' et y' dans l'image suivante, dx, dy désignent les paramètres de translation dans les directions horizontale x, et verticale y pour la transformation par translation, et $a_1$, $a_2$, $a_3$, $a_4$, $a_5$, $a_6$ désignent les paramètres de transformation affine permettant de passer du contour actif courant de l'image courante au contour actif courant de l'image suivante du fait du déplacement ou de la déformation de l'objet élémentaire d'intérêt.

En ce qui concerne l'étape G de préparation des données, c'est-à-dire de définition de la bande formant couronne à partir du contour actif courant ou du contour actif final segmentant l'objet élémentaire d'intérêt, on indique que l'étape précitée peut consister à engendrer une image binaire calculée sur la couronne précitée englobant les noeuds du contour actif final CAF précité. La couronne précédemment mentionnée peut correspondre à la différence des régions englobées par deux dilatations du contour actif final CAF, ces régions pouvant être définies par rapport au centre géométrique du contour actif ou au centre de gravité de ce dernier. Une autre possibilité peut consister à obtenir les régions précitées par des dilatations successives d'une image binaire initialisée à partir du contour actif final CAF considéré.

Compte tenu de ces indications, on indique que la préparation des données réalisée à l'étape G peut consister ainsi à établir :

- le masque délimitant la région sur laquelle est réalisée l'estimation ;
- le nombre de niveaux de la multirésolution utilisée pour exécuter l'estimation de mouvement ;
- le type d'estimation par transformation affine ou translation.

La sous-étape d'affinage de la sélection du contour de l'objet réalisée à la sous-étape $H_2$ peut consister, ainsi que décrit en liaison avec la figure 3b, suite à l'estimation du mouvement de la couronne du contour actif considéré, le contour actif final CAF par exemple, constituant pour l'estimation du mouvement un contour actif courant CAC, à déplacer chaque noeud de ce contour actif CAC de la valeur du mouvement estimé en une sous-étape $H_{21}$, pour engendrer un contour actif initial pour la nouvelle image. Sur la figure 3b, on a représenté le contour actif final formant en fait un contour actif courant CAC par un cercle en pointillé, de manière non limitative, afin de ne pas surcharger le dessin, l'estimation de mouvement ayant donné lieu à un vecteur de déplacement $\vec{D}e$ et le déplacement étant illustré de manière symbolique par le déplacement du centre du contour actif courant CAC, et bien entendu de la périphérie de celui-ci. Ce déplacement permet d'engendrer un contour actif courant déplacé CACD à la fin de l'étape $H_{21}$. Le contour actif courant déplacé CACD constitue ainsi un contour actif courant initial CACI pour l'image suivante.

La sous-étape $H_{21}$ est alors suivie d'une sous-étape $H_{22}$ consistant à dilater le contour actif courant initial CACI par transformation géométrique, pour engendrer un contour actif courant déplacé et dilaté CACDd constituant un contour actif initial de référence CAIR pour cette image suivante. Le processus de dilatation est réalisé par transformation géométrique, la transformation géométrique pouvant consister par exemple en une homothétie par rapport au barycentre du contour actif courant déplacé CACD. Le contour actif initial de référence CAIR ainsi obtenu constitue un contour actif d'origine de l'objet élémentaire pour l'image suivante à la sous-étape $H_{23}$, ce qui permet bien entendu de relancer itérativement la déformation convergente du contour actif d'origine pour engendrer le contour actif courant final pour l'image suivante précitée. On comprend ainsi que, suite à la sous-étape $H_{23}$ de la figure 3b, il est alors possible d'appeler par exemple l'étape B puis l'étape C des figures 1a et 2a pour assurer la segmentation de l'objet, conformément au procédé objet de la présente invention.

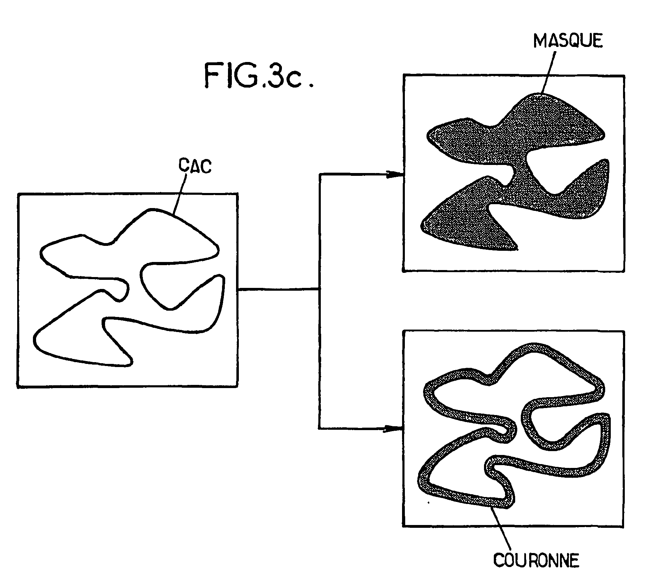

Sur la figure 3c, on a représenté un contour actif quelconque, un masque constitué par une image binaire et enfin, la couronne correspondant à des dilatations successives d'une image binaire initialisée avec le contour actif.

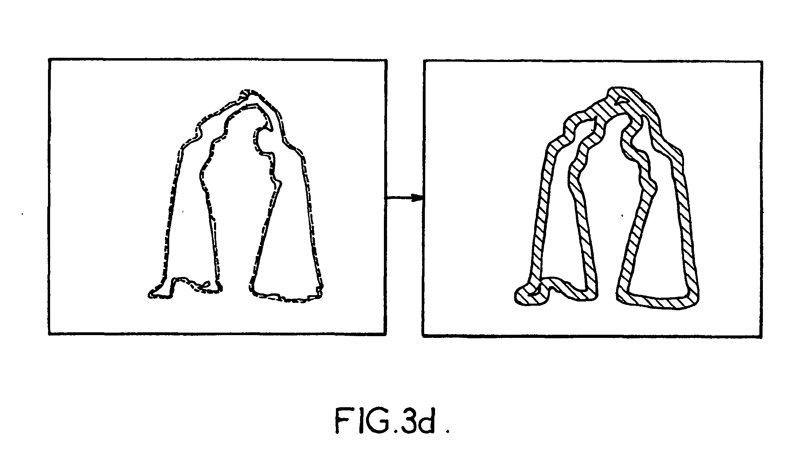

Enfin, sur la figure 3d, on a représenté un objet élémentaire d'intérêt formé par deux personnages jouant une scène de ballet, le contour actif final CAF entourant les deux personnages puis la couronne obtenue autour de ces derniers, grâce à la mise en oeuvre de l'étape G de la figure 3a.

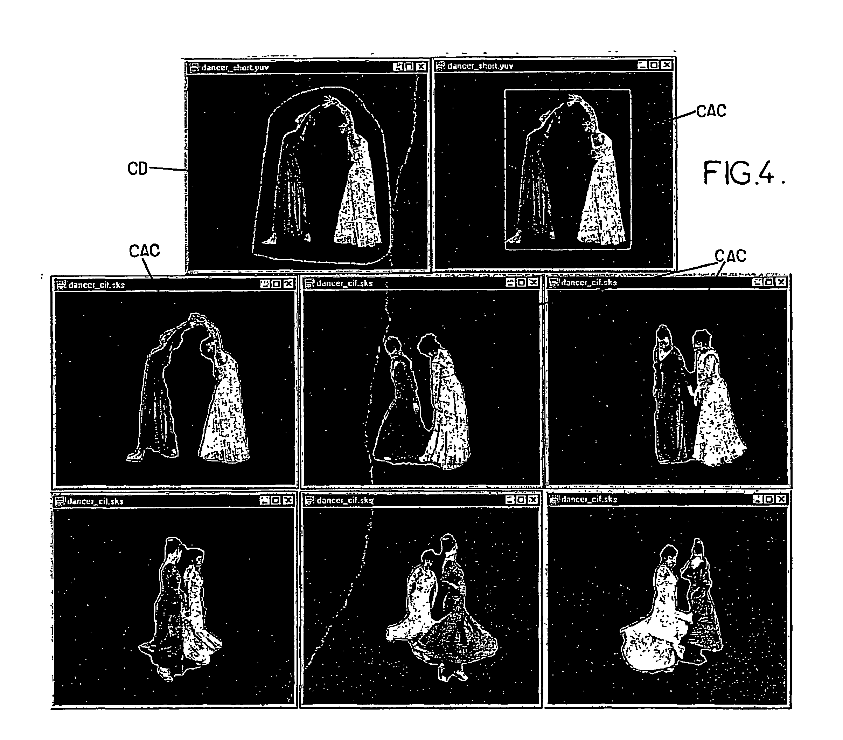

Enfin, la figure 4 représente une scène de ballet jouée par les deux personnages précités. Les deux premières images du haut présente deux sélections possibles des personnages (souris et boîte englobante) englobant les personnages et les six autres images présentent un instant du suivi temporel de ces personnages.

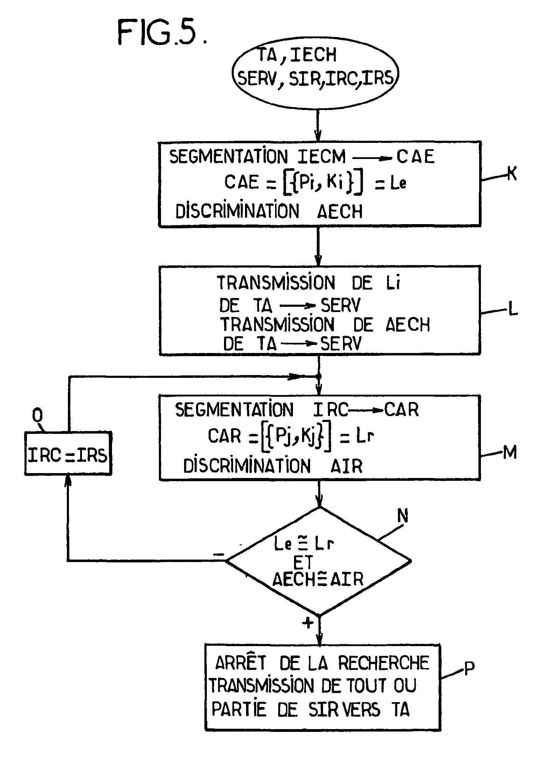

Une description d'un protocole de recherche d'un objet élémentaire d'intérêt dans une ou plusieurs images vidéo mémorisées dans une base de données accessible par un site serveur à partir du procédé de segmentation, objet de la présente invention, cette recherche étant conduite à partir d'un terminal d'accès à ce site serveur, sera maintenant donnée en liaison avec la figure 5.

D'une manière générale, et en référence à la figure précitée, on considère un terminal d'accès, noté TA, tel qu'un terminal constitué par un micro-ordinateur de bureau, un micro-ordinateur portable, un assistant numérique de type PDA, ou un terminal de radiotéléphonie mobile muni d'un écran d'affichage et d'une interface graphique de type WAP par exemple, ce terminal de radiotéléphonie mobile mettant en oeuvre une transmission de type UMTS par exemple, ou GPRS, et permettant l'échange de fichiers avec ce site serveur.

Le terminal TA dispose d'un échantillon, en fait constitué par une image échantillon notée IECH, consistant en au moins une image vidéo échantillon issue de la séquence d'images ou de la pluralité d'images mémorisées dans une base de données du serveur SERV. La séquence d'images mémorisées dans la base de données de ce serveur constitue en fait une séquence d'images de référence, notée SIR, cette séquence d'images étant réputée comporter une pluralité d'images de référence courantes IRC, chaque image de référence courante étant suivie d'une image de référence suivante, notée IRS.

En référence à la figure 5 précitée, le protocole de recherche d'un objet élémentaire d'intérêt, objet de la présente invention, consiste, en une étape K, à segmenter l'image vidéo échantillon IECH suivant le procédé objet de la présente invention, tel que décrit précédemment dans la description en référence aux figures 1 à 4. Le but de cette segmentation est d'engendrer au moins un contour actif échantillon. Ce contour actif échantillon est par exemple un contour actif final CAF, au sens du procédé objet de la présente invention, et constitué par une liste de noeuds associés à l'objet élémentaire d'intérêt appartenant à l'image vidéo échantillon IECH. On rappelle que la liste de noeuds constitue en fait une liste de points distribués sur le contour actif considéré, contour final, à chaque point étant en outre associée une valeur de constante de raideur représentative de l'énergie élastique E, ainsi que précédemment mentionné dans la description. Pour cette raison, le contour actif échantillon est noté :

$$CAE = [\{P_i, K_i\}] = L_e$$

où $P_i$ désigne chaque point du contour actif et $K_i$ désigne la constante de raideur associée à ce point vers un point adjacent.

L'étape K est alors suivie d'une étape L consistant à transmettre la liste des noeuds Le du terminal d'accès TA au site serveur SERV.

L'étape L précitée est alors suivie d'une étape M consistant, au niveau du serveur, à segmenter au moins une image courante de la séquence d'images mémorisées dans la base de données, cette segmentation étant bien entendu effectuée conformément au procédé de segmentation objet de l'invention décrit précédemment dans la description. L'opération de segmentation précitée est notée segmentation IRC, pour engendrer CAR, cette opération permettant bien entendu d'engendrer au moins un contour actif de référence, noté CAR.

Le contour actif de référence est noté :

$$CAR = [\{P_j, K_j\}] = L_r.$$

On comprend bien sûr que la liste $L_r$ constitue le contour actif de référence, lequel est réputé constitué par les points $P_j$ de ce contour actif et le terme de raideur $K_j$ qui est associé à chacun de ces points.

L'étape M est alors elle-même suivie d'une étape N consistant en une étape de test de comparaison par comparaison de similarité du contour actif échantillon Le au contour actif de référence de la liste $L_r$, notée $L_e \cong L_r$.

Par comparaison de similarité, on comprend une comparaison terme à terme des coordonnées des points $P_i$ et $P_j$ distribués sur le contour actif échantillon CAE, respectivement sur le contour actif de référence ACAR, et bien entendu par comparaison des termes de raideur correspondants $K_i$ et $K_j$. La comparaison peut être réalisée avec un intervalle de confiance, de façon à introduire une comparaison de type logique floue permettant de moduler la décision.

Sur réponse négative au test réalisé à l'étape de comparaison N, la liste échantillon et le contour actif échantillon ne pouvant être identifiés de manière satisfaisante à la liste de référence $L_r$ et au contour actif de référence CAR, la recherche est poursuivie sur l'image de référence suivante IRS par retour à l'étape de segmentation M, à la valeur de l'image courante IRC étant toutefois attribuée la valeur de l'image suivante IRS par l'égalité IRC = IRS.

Au contraire, sur comparaison de similarité, la liste échantillon et le contour actif échantillon CAE pouvant être identifiés à la liste de référence L$_r$ et au contour actif de référence CAR, l'étape de comparaison de test N est suivie d'une étape P consistant à arrêter la recherche et à transmettre, si nécessaire, à la demande du terminal TA, tout ou partie de la séquence d'images mémorisées dans la base de données accessible sur le site serveur SERV.

Le protocole objet de la présente invention peut être amélioré dans la mesure où, à chaque contour actif échantillon CAE, et en contrepartie, à chaque contour actif de référence CAR, peuvent être associés différents paramètres attributs de l'objet élémentaire sujet de la recherche, afin d'améliorer les performances de reconnaissance d'objets.

Dans ce but, ainsi que représenté également en figure 5, le protocole objet de la présente invention peut comporter des étapes consistant à discriminer dans l'objet d'intérêt des attributs de composante d'objet échantillon, notés AECH, attributs tels que couleur, texture, paramètres de mouvement, etc. de l'objet élémentaire d'intérêt dans l'image échantillon considérée. En effet, alors qu'on dispose du contour actif échantillon CAE, on dispose nécessairement du contour actif final CAF et, en conséquence, du contour naturel de l'objet en question. Il est alors particulièrement aisé de calculer, dans ce contour naturel, les attributs précités à partir de méthodes de traitement et d'analyse d'images.

En outre, à l'étape L, on transmet les attributs de composante d'objet échantillon AECH du terminal d'accès TA au site serveur SERV.

En outre, à l'étape M, le protocole objet de l'invention peut consister à discriminer, dans l'objet délimité par le contour actif de référence CAR, des attributs de composante d'objet de référence de même type que ceux des attributs de composante d'objet échantillon. Les attributs de composante d'objet de référence sont notés AIR et correspondent de la même façon à des attributs tels que texture, couleur, température de couleur ou autre, dans l'objet délimité par le contour actif de référence.

L'étape M est alors suivie d'une étape N dans laquelle on compare en outre les attributs de composante d'objet de référence AECH et les attributs de composante d'objet échantillon AIR pour commander l'arrêt, respectivement la poursuite de la recherche. On comprend en particulier que cette commande peut être réalisée par un couplage par une fonction ET de la comparaison de la liste échantillon et du contour actif échantillon à la liste de référence et au contour actif de référence à la comparaison des attributs échantillon aux attributs de composante d'objet de référence.

Bien entendu, la comparaison sur les attributs précités peut être réalisée compte tenu d'une plage de confiance, afin d'introduire une décision en logique floue, ainsi que mentionné précédemment dans la description.

En ce qui concerne la mise en oeuvre de l'étape M de segmentation de l'image de référence courante, on indique que le cas où cette image comporte plusieurs objets élémentaires d'intérêt ne constitue pas un obstacle à la mise en oeuvre du protocole objet de la présente invention, dans la mesure où, dans un tel cas, il est possible de prévoir arbitrairement un contour actif de départ CD entourant sensiblement toute l'image à sa périphérie, le procédé objet de la présente invention permettant une segmentation en plusieurs objets d'intérêt élémentaires lorsque ceux-ci sont disjoints. En conséquence, et indépendamment du choix dans l'image échantillon IECH d'un objet élémentaire d'intérêt par l'utilisateur, il existe ainsi toujours, dans chaque image de référence courante IRC, un objet élémentaire de référence correspondant sensiblement à l'objet choisi par l'utilisateur dans l'image échantillon IECH.

Le protocole objet de la présente invention apparaît ainsi particulièrement bien adapté à la mise en oeuvre d'une recherche d'image dans les séquences d'images vidéo au standard MPEG 4 par exemple.

**Revendications**

1.  Procédé de segmentation d'une image d'une séquence animée (IM) par objets élémentaires, **caractérisé en ce que** celui-ci consiste, vis-à-vis d'au moins un objet élémentaire (OBJ) délimité par un contour naturel (CN) de cette image:

    -   à définir, autour de cet objet élémentaire, un contour de départ (CD) entourant totalement ledit objet élémentaire ;
    -   à définir, à partir dudit contour de départ, un contour actif d'origine (CAO), formé par un ensemble de noeuds distribués sur ce contour de départ, chaque noeud étant formé par un point appartenant à ce contour de départ et par une fonction d'énergie élastique représentative de la distance (d) séparant ce noeud d'un noeud voisin ;
    -   à soumettre, vis-à-vis d'un ensemble de valeurs de référence susceptible de représenter le contour naturel dudit objet élémentaire, ledit contour actif d'origine à une déformation convergente, par déplacement vers le contour naturel de l'objet élémentaire d'au moins un des noeuds du contour actif d'origine, pour engendrer un contour actif courant (CAC), ce contour actif courant étant soumis itérativement à ladite déformation convergente pour engendrer des contours actifs courants successifs distincts tant que ledit déplacement satisfait à une condition de non blocage et à stopper tout déplacement de noeud dudit contour actif courant sinon, ce qui permet d'engendrer un contour actif courant final reproduisant sensiblement le contour naturel dudit objet élémentaire.

**2.** Procédé selon la revendication 1, **caractérisé en ce que** l'ensemble de noeuds de chaque contour actif est défini par modélisation polygonale par échantillonnage sur la trace du contour actif en fonction de la distance (d) entre noeuds consécutifs, ce qui permet d'adapter la résolution de définition de chacun des contours actifs successifs.

**3.** Procédé selon l'une des revendications 1 ou 2, **caractérisé en ce que** ladite déformation convergente consiste :

- à calculer en chacun des noeuds du contour actif courant (CAC) un vecteur normal au contour actif ;
- à soumettre au moins l'un des noeuds dudit contour actif à un déplacement centripète dans la direction dudit vecteur normal associé audit noeud.

**4.** Procédé selon l'une des revendications 1 à 3, **caractérisé en ce que** ledit ensemble de valeurs de référence consiste en un ensemble de valeurs de gradient d'intensité d'image, calculé sur ledit contour actif.

**5.** Procédé selon l'une des revendications 1 à 4, **caractérisé en ce que** ledit objet élémentaire (OBJ) étant constitué par un objet animé dans l'image, objet animé susceptible de mouvement, de déformation et de partition, pour tout contour actif susceptible de constituer une boucle présentant au moins un point d'intersection suite à une partition dudit objet élémentaire en composantes d'objets élémentaires, celui-ci consiste :

- à détecter l'existence sur ledit contour actif d'au moins une intersection ;
- à scinder / regrouper ledit contour actif en un nombre de contours actifs distincts égal au nombre d'intersections augmenté d'une unité, ce qui permet d'affecter un contour actif final (CAF) à chaque composante dudit objet élémentaire.

**6.** Procédé selon l'une des revendications 1 à 5, **caractérisé en ce que** ledit objet élémentaire étant constitué par un objet animé mobile dans l'image, celui-ci consiste en outre, pour au moins deux images successives d'une séquence animée:

- à définir sur chaque contour actif final (CAF) de chaque image une bande, formant couronne, englobant l'ensemble des noeuds appartenant audit contour actif ;
- à effectuer entre des points de ladite couronne un estimation de mouvement de l'objet élémentaire (OBJ) de l'image à l'image suivante, permettant de définir un vecteur mouvement sur les noeuds dudit contour actif ;
- à appliquer, à chaque noeud dudit contour actif, ledit vecteur de mouvement, à l'image suivante, ce qui permet d'assurer le suivi de l'objet élémentaire mobile par ledit contour actif final et de discriminer le dit objet élémentaire mobile compte tenu du mouvement de ce dernier.

**7.** Procédé selon la revendication 6, **caractérisé en ce que**, dans le but d'affiner la segmentation de l'image, celui-ci consiste, suite à l'estimation du mouvement de la couronne du contour actif :

- à déplacer chaque noeud de ce contour actif de la valeur du mouvement estimé pour engendrer un contour actif initial pour la nouvelle image ;
- à dilater ce contour actif initial, par transformation géométrique, pour engendrer un contour actif initial de référence pour cette nouvelle image, ledit contour actif initial de référence constituant un contour actif d'origine (CAO) de cet objet (OBJ);
- à relancer itérativement la déformation convergente dudit contour actif d'origine, pour engendrer ledit contour actif courant final (CAF).

**8.** Protocole de recherche d'un objet élémentaire d'intérêt dans une séquence animée d'images mémorisées dans une base de données accessible sur un site serveur (SERV), à partir d'un terminal d'accès à ce site serveur, ce terminal d'accès (TA) disposant d'un échantillon consistant en au moins une image échantillon issue de cette séquence d'images, **caractérisé en ce que** celui-ci consiste au moins :

- à segmenter ladite image échantillon suivant le procédé objet de la présente invention selon l'une des revendications 1 à 7, pour engendrer au moins un contour actif échantillon constitué par une liste de noeuds associés audit objet élémentaire d'intérêt appartenant à cette image vidéo échantillon ;
- à transmettre à ladite liste de noeuds dudit terminal d'accès audit site serveur ;

- à segmenter au moins une image courante de ladite séquence d'images mémorisées dans ladite base de données suivant le procédé objet de la présente invention selon l'une des revendications 1 à 7, pour engendrer au moins un contour actif de référence (CAR);
- à comparer, par comparaison de similarité, ledit contour actif échantillon audit contour actif de référence et, sur comparaison de similarité, arrêter la recherche pour assurer la transmission de tout ou partie de ladite séquence d'images mémorisées vers ledit terminal d'accès, et poursuivre la recherche sur tout image suivant ladite image courante dans ladite séquence d'images mémorisées sinon.

9. Protocole selon la revendication 8, **caractérisé en ce que** celui-ci comporte en outre les étapes consistant à :

- discriminer dans ledit objet d'intérêt des attributs de composante d'objet échantillon tels que couleur, texture, paramètres de mouvement, dans ladite image vidéo échantillon ;
- transmettre lesdits attributs de composante d'objet dudit terminal d'acces (TA) audit site serveur (SERV);
- discriminer dans l'objet délimité par ledit contour actif de référence (CAR) des attributs de composante d'objet de référence de même type que ceux des attributs de composante d'objet échantillon ;
- comparer les attributs de composantes d'objet de référence et les attributs de composante d'objet échantillon pour commander l'arrêt, respectivement la poursuite de la recherche.

**Patentansprüche**

1. Verfahren zur Segmentierung eines Bilds einer animierten Sequenz (IM) durch Einzelobjekte, **dadurch gekennzeichnet, dass** es darin besteht, dass gegenüber mindestens einem durch einen natürlichen Umriss (CN) begrenzten Einzelobjekt (OBJ) dieses Bilds:

- um dieses Einzelobjekt herum ein Ausgangsumriss (CD) definiert wird, der dieses Einzelobjekt vollständig umgibt;
- ausgehend von diesem Ausgangsumriss ein aktiver Ursprungsumriss (CAO) definiert wird, der von einer Einheit von auf diesem Ausgangsumriss verteilten Knoten gebildet ist, wobei jeder Knoten von einem Punkt gebildet ist, der zu diesem Ausgangsumriss gehört, sowie von einer elastischen Energiefunktion, die den diesen Knoten von einem benachbarten Knoten trennenden Abstand (d) darstellt;
- gegenüber einer Einheit von Bezugswerten, die den natürlichen Umriss dieses Einzelobjekts darstellen kann, dieser aktive Ursprungsumriss einer konvergenten Verformung durch Bewegung mindestens eines der Knoten des aktiven Ursprungsumrisses auf den natürlichen Umriss des Einzelobjekts zu unterzogen wird, um einen laufenden aktiven Umriss (CAC) zu erzeugen, wobei dieser laufende aktive Umriss dieser konvergenten Verformung iterativ unterzogen wird, um verschiedene aufeinanderfolgende laufende aktive Umrisse zu erzeugen, solange diese Bewegung eine Nichtblockierungsbedingung erfüllt, und andernfalls jede Knotenbewegung dieses laufenden aktiven Umrisses gestoppt wird, was gestattet, einen laufenden aktiven Endumriss zu erzeugen, der im wesentlichen den natürlichen Umriss dieses Einzelobjekts wiedergibt.

2. Verfahren nach Anspruch 1, **dadurch gekennzeichnet, daß** die Einheit der Knoten jedes aktiven Umrisses durch polygonale Modellierung durch Abtastung auf der Spur des aktiven Umrisses in Abhängigkeit von dem Abstand (d) zwischen aufeinanderfolgenden Knoten definiert wird, was gestattet, die Definitionsauflösung jedes der aufeinanderfolgenden aktiven Umrisse anzupassen.

3. Verfahren nach einem der Ansprüche 1 oder 2, **dadurch gekennzeichnet, dass** diese konvergierende Verformung darin besteht, dass.

- an jedem der Knoten des laufenden aktiven Umrisses (CAC) ein zum aktiven Umriss normaler Vektor errechnet wird;
- mindestens einer der Knoten dieses aktiven Umrisses einer zentripetalen Bewegung in der Richtung dieses diesem Knoten zugeordneten normalen Vektors unterzogen wird.

4. Verfahren nach einem der Ansprüche 1 bis 3, **dadurch gekennzeichnet, dass** diese Einheit von Bezugswerten aus einer auf diesem aktiven Umriss errechneten Einheit von Bilstärkegradientwerten besteht.

5. Verfahren nach einem der Ansprüche 1 bis 4, **dadurch gekennzeichnet, dass** es, wenn dieses Einzelobjekt (OBJ) aus einem animierten Objekt im Bild besteht, wobei das animierte Objekt der Bewegung, der Verformung und der Aufteilung fähig ist, für jeden aktiven Umriss, der eine Schleife bilden kann, die mindestens einen Schnittpunkt infolge einer Aufteilung dieses Einzelobjekts in Komponenten von Einzelobjekten aufweist, darin besteht, dass

- das Vorhandensein mindestens eines Schnittpunkts auf diesem aktiven Umriss erfasst wird,
- dieser aktive Umriss in eine Anzahl von verschiedenen aktiven Umrissen, die gleich der Anzahl von Schnittpunkten plus eins ist, aufgeteilt/zusammengefasst wird, was gestattet, jeder Komponente dieses Einzelobjekts einen aktiven Endumriss (CAF) zuzuteilen

6. Verfahren nach einem der Ansprüche 1 bis 5, **dadurch gekennzeichnet, dass** es, wenn dieses Einzelobjekt aus einem im Bild beweglichen animierten Objekt besteht, außerdem für mindestens zwei aufeinanderfolgende Bilder einer animierten Sequenz darin besteht, dass:

- auf jedem aktiven Endumriss (CAF) jedes Bildes ein einen Kranz bildendes Band definiert wird, das die Einheit der zu diesem aktiven Umriss gehörenden Knoten umfasst;
- zwischen Punkten dieses Kranzes eine Schätzung der Bewegung des Einzelobjekts (OBJ) des Bilds zum folgenden Bild vorgenommen wird, die gestattet, auf den Knoten dieses aktiven Umrisses einen Bewegungsvektor zu definieren;
- auf jeden Knoten dieses aktiven Umrisses dieser Bewegungsvektor zum folgenden Bild angelegt wird, was gestattet, die Verfolgung des beweglichen Einzelobjekts durch diesen aktiven Endumriss zu gewährleisten und dieses bewegliche Einzelobjekt unter Berücksichtigung der Bewegung des letzteren zu unterscheiden.

7. Verfahren nach Anspruch 6, **dadurch gekennzeichnet, dass** es zum Zweck der Verfeinerung der Segmentierung des Bilds darin besteht, dass auf die Schätzung der Bewegung des Kranzes des aktiven Umrisses hin:

- jeder Knoten dieses aktiven Umrisses um den Wert der geschätzten Bewegung bewegt wird, um einen aktiven Anfangsumriss für das neue Bild zu erzeugen;
- dieser aktive Anfangsumriss durch geometrische Transformation ausgedehnt wird, um einen aktiven Bezugsanfangsumriss für dieses neue Bild zu erzeugen, wobei dieser aktive Bezugsanfangsumriss einen aktiven Ursprungsumriss (CAO) dieses Objekts (OBJ) bildet;
- die konvergente Verformung dieses aktiven Ursprungsumrisses iterativ wiederholt wird, um diesen laufenden aktiven Endumriss (CAF) zu erzeugen.

8. Protokoll für die Suche eines Einzelobjekts von Interesse in einer animierten Sequenz von Bildern, die in einer auf einer Serversite (SERV) zugänglichen Datenbasis gespeichert sind, von einem Terminal für den Zugang auf diese Serversite aus, wobei dieser Zugangsterminal (TA) über eine Probe verfügt, die aus mindestens einem von dieser Bildersequenz kommenden Probebild besteht, **dadurch gekennzeichnet, dass** es mindestens darin besteht, dass:

- dieses Probebild gemäß dem erfindungsgemäßen Verfahren nach einem der Ansprüche 1 bis 7 segmentiert wird, um mindestens einen aktiven Probeumriss zu erzeugen, der aus einer Liste von Knoten besteht, die diesem zu diesem Probevideobild gehörenden Einzelobjekt von Interesse zugeordnet sind;
- diese Liste von Knoten vom Zugangsterminal zu der Serversite übertragen wird,
- mindestens ein laufendes Bild dieser in dieser Datenbasis gespeicherten Bildersequenz gemäß dem erfindungsgemäßen Verfahren nach einem der Ansprüche 1 bis 7 segmentiert wird, um mindestens einen aktiven Bezugsumriss (CAR) zu erzeugen;
- dieser aktive Probenumriss durch Ähnlichkeitsvergleich mit diesem aktiven Bezugsumriss verglichen wird und auf Ähnlichkeitsvergleich hin die Suche abgebrochen wird, um die Übertragung der ganzen Sequenz von gespeicherten Bildern oder eines Teils davon zum Zugangsterminal zu gewährleisten, und andernfalls die Suche auf dem ganzen diesem laufenden Bild folgenden Bild in dieser Sequenz von gespeicherten Bildern weitergeführt wird.

9. Protokoll nach Anspruch 8, **dadurch gekennzeichnet, dass** es außerdem die Schritte umfasst, die darin bestehen, dass:

- in diesem Objekt von Interesse Probeobjektkomponentenattribute, wie Farbe, Textur, Bewegungsparameter, in diesem Probevideobild unterschieden werden;
- diese Objektkomponentenattribute von diesem Zugangsterminal (TA) zu dieser Serversite (SERV) übertragen werden;

- in dem durch diesen aktiven Bezugsumriss (CAR) begrenzten Objekt Bezugsobjektkomponentenattribute vom selben Typ wie die der Probenobjektkomponentenattribute unterschieden werden;

die Bezugsobjektkomponentenattribute und die Probenobjektkomponentenattribute verglichen werden, um die Unterbrechung bzw. die Weiterführung der Suche auszulösen.

**Claims**

1. A method for segmenting an image (IM) of an animated sequence based on elementary objects, **characterized in that** it consists, with regard to at least one elementary object (OBJ) delimited by a natural contour (CN) of this image:

   - in defining, around this elementary object, a starting contour (CN) completely surrounding said elementary object;
   - in defining, on the basis of said starting contour, an original active contour, formed by a set of nodes distributed on this starting contour, each node being formed by a point belonging to this starting contour and by an elastic energy function representative of the distance (d) separating this node from a neighboring node;
   - in subjecting, with regard to a set of reference values which is capable of representing the natural contour of said elementary object, said original active contour to a convergent deformation, by displacing toward the natural contour of the elementary object at least one of the nodes of the original active contour, so as to generate a current active contour (CAC), this current active contour being subjected iteratively to said convergent deformation so as to generate distinct successive current active contours as long as said displacement satisfies a non-blocking condition and in halting any nodal displacement of said current active contour otherwise, thereby making it possible to generate a final current active contour substantially reproducing the natural contour of said elementary object.

2. The method as claimed in claim 1, **characterized in that** the set of nodes of each active contour is defined by polygonal modeling by sampling over the trace of the active contour as a function of the distance (d) between consecutive nodes, thereby making it possible to adapt the resolution of definition of each of the successive active contours.

3. The method as claimed in one of claims 1 or 2, **characterized in that** said convergent deformation consists:

   - in calculating at each of the nodes of the current active contour (CAC) a vector normal to the active contour;
   - in subjecting at least one of the nodes of said active contour to a centripetal displacement in the direction of said normal vector associated with said node.

4. The method as claimed in one of claims 1 to 3, **characterized in that** said set of reference values consists of a set of values of image intensity gradient, calculated over said active contour.

5. The method as claimed in one of claims 1 to 4, **characterized in that** said elementary object (OBJ) being constituted by an animate object in the image, which animate object is capable of motion, of deformation and of partition, for any active contour capable of constituting a loop exhibiting at least one point of intersection subsequent to a partition of said elementary object into components of elementary objects, it consists:

   - in detecting the existence on said active contour of at least one intersection;
   - in splitting/grouping said active contour into a number of distinct active contours equal to the number of intersections plus one unit, thereby making it possible to assign a final active contour (CAF) to each component of said elementary object.

6. The method as claimed in one of claims 1 to 5, **characterized in that** said elementary object being constituted by an animate object moving in the image, it furthermore consists, for at least two successive images of an animated sequence:

   - in defining on each final active contour (CAF) of each image a band, forming a ring, encompassing the set of nodes belonging to said active contour;
   - in performing between points of said ring an estimation of motion of the elementary object (OBJ) from the image to the next image, making it possible to define a motion vector over the nodes of said active contour;

- in applying, at each node of said active contour, said motion vector, to the next image, thereby making it possible to track the moving elementary object by said final active contour and to discriminate said moving elementary objet having regard to the motion of the latter.

**7.** The method as claimed in claim 6, **characterized in that**, with the aim of refining the segmentation of the image, it consists, subsequent to the estimation of the motion of the ring of the active contour:

- in displacing each node of this active contour by the value of the estimated motion so as to generate an initial active contour for the new image;
- in dilating this initial active contour, by geometrical transformation, so as to generate a reference initial active contour for this new image, said reference initial active contour constituting an original active contour (CAO) of this object (OBJ);
- in iteratively recommencing the convergent deformation of said original active contour, so as to generate said final current active contour (CAF).

**8.** A protocol for searching for an elementary object of interest in an animated sequence of images stored in a database accessible on a server site (SERV), from a terminal for access to this server site, this access terminal (TA) being furnished with a sample consisting of at least one sample image emanating from this sequence of images, **characterized in that** it consists at least:

- in segmenting said sample image following the method which is the subject of the present invention according to one of claims 1 to 7, so as to generate at least one sample active contour constituted by a list of nodes associated with said elementary object of interest belonging to this sample video image;
- in transmitting to said list of nodes from said terminal for access to said server site;
- in segmenting at least one current image of said sequence of images stored in said database following the method which is the subject of the present invention according to one of claims 1 to 7, so as to generate at least one reference active contour (CAR);
- in comparing, by comparison of similarity, said sample active contour with said reference active contour and, on comparison of similarity, stopping the search so as to ensure the transmission of all or part of said sequence of stored images to said access terminal, and continuing the search over every image following said current image in said sequence of stored images otherwise.

**9.** The protocol as claimed in claim 8, **characterized in that** it furthermore comprises the steps consisting in:

- discriminating, in said object of interest, sample object component attributes such as color, texture, motion parameters, in said sample video image;
- transmitting said object component attributes from said access terminal (TA) to said server site (SERV);
- discriminating, in the object delimited by said reference active contour (CAR), reference object component attributes of the same type as those of the sample object component attributes;
- comparing the reference object component attributes and the sample object component attributes so as to instruct the stoppage, respectively the continuation of the search.

EP 1 316 065 B1

FIG.1a.

21

FIG.1b.

SOUS-ÉTAPE 1

SOUS-ÉTAPE 2

SOUS-ÉTAPE 3

SOUS-ÉTAPE 4

S max

Smin

EP 1 316 065 B1

EP 1 316 065 B1

FIG.2a.

FIG.2b.

FIG.2c.

EP 1 316 065 B1

FIG.3a.

F ── FIGURE.1a.
FIGURE.2a.

PREPARATION DES DONNÉES ── G

H

ESTIMATION DU MOUVEMENT APPLIQUÉ AU CONTOUR ACTIF ── $H_1$

AFFINAGE DE LA SÉLECTION DU CONTOUR DE L'OBJET ── $H_2$

J

OUI

ENCORE? ── I

NON

SUITE PROCÉDÉ IMAGE SUIVANTE

CAC

CACD = CACI ── $H_{21}$

FIG.3b.

$\vec{De}$

CACDd = CAIR ── $H_{22}$ $\rangle H_2$

CACD

CAIR = CAO ── $H_{23}$

FIG.3c.

FIG.3d.

FIG.4.

# FIG.5.

```
         ┌─────────────────┐
         │  TA , IECH      │
         │ SERV, SIR,IRC,IRS│
         └────────┬────────┘
                  │
                  ▼
┌──────────────────────────────────────┐
│  SEGMENTATION IECM ──► CAE            │      K
│     CAE = [{Pi, Ki}] = Le            │
│  DISCRIMINATION  AECH                 │
└──────────────────┬───────────────────┘
                   │
                   ▼
┌──────────────────────────────────────┐
│  TRANSMISSION  DE  Li                 │
│     DE  TA ──► SERV                    │      L
│  TRANSMISSION  DE  AECH               │
│     DE  TA ──► SERV                    │
└──────────────────┬───────────────────┘
```

$$CAE = [\{Pi, Ki\}] = Le$$

$$CAR = [\{Pj, Kj\}] = Lr$$

IRC = IRS     Q

SEGMENTATION  IRC ──► CAR     M

DISCRIMINATION  AIR

$$Le \cong Lr$$
ET
$$AECH \cong AIR$$     N

ARRÊT DE LA RECHERCHE
TRANSMISSION DE TOUT OU
PARTIE DE SIR VERS TA     P